# EUROPEAN PATENT APPLICATION

(11) **EP 4 848 562 A1**
(43) Date of publication of application: **02.12.2026**
(21) Application number: 25744978.5
(22) Date of filing: 07.01.2025
(51) Int. Cl.: H02M 7/48, H02P 25/22

(54) **CONTROL DEVICE FOR ROTARY ELECTRICAL MACHINE, PROGRAM, AND METHOD FOR CONTROLLING ROTARY ELECTRICAL MACHINE**

(30) Priority: 23.01.2024 JP 2024007822
(71) Applicant: DENSO CORPORATION, Kariya-city, Aichi 448-8661 (JP)
(72) Inventor: KUBOTA, Masaru, Kariya-city, Aichi 448-8661 (JP)
(74) Representative: TBK
(86) International application number: PCT/JP2025/000222
(87) International publication number: WO 2025/158895

(57) **Abstract**

A control device (70) includes a setting unit (85) configured to set Y drive control or H drive control, and a determination unit (87) configured to determine whether partial discharge is likely to occur between armature windings (51U to 51W) of two different phases. The Y drive control is control in which, with a changeover switch (QH, QL) turned off, second upper-arm switches (SUHb to SWHb) of respective phases are held in an ON state and second lower-arm switches (SULb to SWLb) of the respective phases are held in an OFF state, or with the changeover switch turned off, the second lower-arm switches of the respective phases are held in an ON state and the second upper-arm switches of the respective phases are held in an OFF state, and first upper-arm switches (SUHa to SWHa) and first lower-arm switches (SULa to SWLa) are turned on and off. The H drive control is control in which the first upper-arm switches, the first lower-arm switches, the second upper-arm switches, and the second lower-arm switches are turned on and off. When it is determined that partial discharge is likely to occur, the setting unit restricts the H drive control.

## Description

### [Cross Reference to Related Application]

This application is based on and claims the benefit of priority from Japanese Patent Application No. 2024-007822 filed January 23, 2024, the contents of each of which are incorporated herein by reference.

### [Technical Field]

The present disclosure relates to a control device for a rotating electric machine, a program for controlling a rotating electric machine, and a method for controlling a rotating electric machine.

### [Background Art]

Conventionally, a system that performs drive control of a rotating electric machine using two inverters have been known. In such a system, a first inverter is electrically connected to first ends of multi-phase armature windings included in the rotating electric machine, and a second inverter is electrically connected to second ends of the armature windings. Drive control of the rotating electric machine is performed by switching control of the first and second inverters. An example of such a technique is disclosed in PTL 1.

### [Citation List]

### [Patent Literature]

[PTL 1]JP 2017-175747 A

### [Summary of the Invention]

When a potential difference between armature windings of two different phases is large, partial discharge may occur between the armature windings of the two different phases.

A main object of the present disclosure is to provide a control device for a rotating electric machine, a program for controlling a rotating electric machine, and a method for controlling a rotating electric machine that are capable of inhibiting occurrence of partial discharge.

The present disclosure provides a control device for a rotating electric machine, the control device being applied to a system including:
a rotating electric machine including multi-phase armature windings;
a first inverter including, for each phase, a first upper-arm switch and a first lower-arm switch connected in series with each other, a series connection of the first upper-arm switch and the first lower-arm switch being connected in parallel with a DC power source;
a second inverter including, for each phase, a second upper-arm switch and a second lower-arm switch connected in series with each other;
a positive-electrode-side bus electrically connecting, for each phase, a high-potential-side terminal of the first upper-arm switch and a high-potential-side terminal of the second upper-arm switch;
a negative-electrode-side bus electrically connecting, for each phase, a low-potential-side terminal of the first lower-arm switch and a low-potential-side terminal of the second lower-arm switch; and
a changeover switch provided in a target bus, the target bus being at least one of the positive-electrode-side bus and the negative-electrode-side bus. In the system, for each phase, a low-potential-side terminal of the first upper-arm switch and a high-potential-side terminal of the first lower-arm switch are electrically connected to a first end of the armature winding. For each phase, a low-potential-side terminal of the second upper-arm switch and a high-potential-side terminal of the second lower-arm switch are electrically connected to a second end of the armature winding. The changeover switch electrically connects the first inverter and the second inverter on the target bus when turned on, and disconnects the first inverter and the second inverter from each other on the target bus when turned off.

The present disclosure provides a setting unit configured to set, as a control mode of the first upper-arm switch, the first lower-arm switch, the second upper-arm switch, and the second lower-arm switch, either Y drive control or H drive control; and a determination unit configured to determine whether partial discharge is likely to occur between the armature windings of two different phases.

The Y drive control is control in which, with the changeover switch turned off, the second upper-arm switches of respective phases are fixed in an ON state and the second lower-arm switches of the respective phases are fixed in an OFF state, or with the changeover switch turned off, the second lower-arm switches of the respective phases are fixed in an ON state and the second upper-arm switches of the respective phases are fixed in an OFF state, and the first upper-arm switch and the first lower-arm switch are turned on and off.

The H drive control is control in which the first upper-arm switch, the first lower-arm switch, the second upper-arm switch, and the second lower-arm switch are turned on and off. The setting unit of the present disclosure is configured to, when the determination unit determines that the partial discharge is likely to occur, perform a process for restricting the H drive control.

In the H drive control, a potential difference, specifically, a maximum value of the potential difference, between armature windings of two different phases becomes larger than in the Y drive control. Thus, when the H drive control is performed, partial discharge may be more likely to occur between the armature windings of two different phases than when the Y drive control is performed.

Thus, when the determination unit determines that partial discharge is likely to occur, the setting unit of the present disclosure performs a process for restricting the H drive control. This makes it possible to inhibit occurrence of partial discharge between the armature windings of two different phases.

### [Brief Description of the accompanying drawings]

The above-described and other objects, features, and advantages of the present disclosure will become clearer from the following detailed description with reference to the accompanying drawings. The accompanying drawings are as follows:
FIG. 1 is a schematic diagram illustrating an overall configuration of a control system according to a first embodiment;
FIG. 2 is a functional block diagram of a control process performed by a control device;
FIG. 3 is a diagram illustrating a control mode of Y drive control;
FIG. 4 is a diagram illustrating a control mode of H drive control;
FIG. 5 is a flowchart of a process performed by the control device;
FIG. 6 is a diagram illustrating first map information;
FIG. 7 is a diagram illustrating second map information;
FIG. 8 is a flowchart of a process performed by a control device according to a second embodiment;
FIG. 9 is a diagram illustrating second map information;
FIG. 10 is a flowchart of a process performed by a control device according to a third embodiment;
FIG. 11 is a diagram illustrating an example of a drive circuit of a switch;
FIG. 12 is a diagram illustrating an example of a drive circuit of a switch;
FIG. 13 is a flowchart of a process performed by a control device according to a fourth embodiment;
FIG. 14 is a circuit diagram illustrating turn-on performed when dielectric strength is high;
FIG. 15 is a circuit diagram illustrating turn-on performed when dielectric strength is high;
FIG. 16 is a circuit diagram illustrating turn-off performed when dielectric strength is high;
FIG. 17 is a circuit diagram illustrating turn-off performed when dielectric strength is high;
FIG. 18 is a circuit diagram illustrating turn-on performed when dielectric strength is high;
FIG. 19 is a circuit diagram illustrating turn-on performed when dielectric strength is high;
FIG. 20 is a circuit diagram illustrating turn-off performed when dielectric strength is high;
FIG. 21 is a circuit diagram illustrating turn-off performed when dielectric strength is high;
FIG. 22 is a circuit diagram illustrating turn-on performed when dielectric strength is low;
FIG. 23 is a circuit diagram illustrating turn-on performed when dielectric strength is low;
FIG. 24 is a circuit diagram illustrating turn-off performed when dielectric strength is low;
FIG. 25 is a circuit diagram illustrating turn-off performed when dielectric strength is low;
FIG. 26 is a circuit diagram illustrating turn-on performed when dielectric strength is low;
FIG. 27 is a circuit diagram illustrating turn-on performed when dielectric strength is low;
FIG. 28 is a circuit diagram illustrating turn-off performed when dielectric strength is low;
FIG. 29 is a circuit diagram illustrating turn-off performed when dielectric strength is low;
FIG. 30 is a flowchart of a process performed by a control device according to a fifth embodiment;
FIG. 31 is a timing diagram illustrating a switching pattern when dielectric strength is high;
FIG. 32 is a timing diagram illustrating a switching pattern when dielectric strength is low;
FIG. 33 is a flowchart of a process performed by a control device according to a sixth embodiment;
FIG. 34 is a timing diagram illustrating example switching timing intervals for switching states of respective phases;
FIG. 35 is a diagram illustrating an example of a method of setting a threshold;
FIG. 36 is a schematic diagram illustrating an overall configuration of a control system according to a seventh embodiment;
FIG. 37 is a flowchart of a process performed by a control device;
FIG. 38 is a schematic diagram illustrating an overall configuration of a control system according to another embodiment;
FIG. 39 is a diagram illustrating a control mode of Y drive control according to another embodiment.

### [Description of the Embodiments]

A plurality of embodiments will be described with reference to the accompanying drawings. In the plurality of embodiments, portions that functionally and/or structurally correspond to and/or are associated with each other may be assigned the same reference numerals or reference numerals that differ in the hundreds digit or higher. For corresponding and/or associated portions, descriptions of other embodiments may be referred to.

### <First Embodiment>

A first embodiment embodying a control device according to the present disclosure will be described below with reference to the accompanying drawings. The control device of the present embodiment is applied to a control system mounted to an electric vehicle such as an electric automobile or a hybrid vehicle.

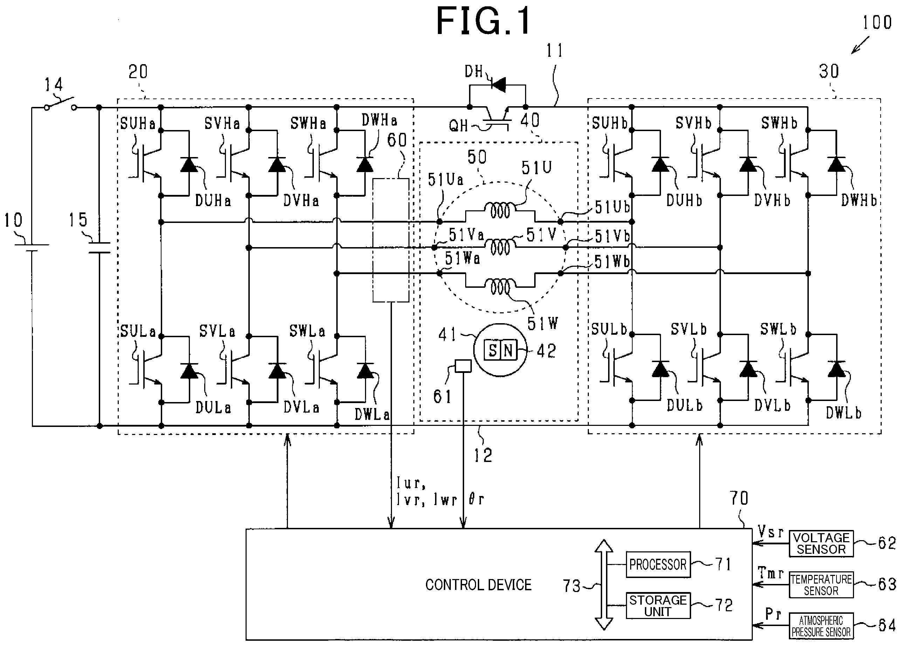

As illustrated in FIG. 1, a control system 100 includes a battery 10, which is a DC power source, a first inverter 20, a second inverter 30, and a rotating electric machine 40. The battery 10 may be, for example, an assembled battery including a series connection of unit batteries. Each unit battery is one battery cell or a series connection of a plurality of battery cells. The battery cell may be, for example, a rechargeable battery such as a lithium-ion battery.

The first inverter 20 and the second inverter 30 are power conversion circuits that convert DC power supplied from the battery 10 into three-phase AC power and supply the three-phase AC power to the rotating electric machine 40.

The first inverter 20 includes series connections each including one of U-, V-, and W-phase first upper-arm switches SUHa, SVHa, and SWHa and a corresponding one of U-, V-, and W-phase first lower-arm switches SULa, SVLa, and SWLa. The second inverter 30 includes series connections each including one of U-, V-, and W-phase second upper-arm switches SUHb, SVHb, and SWHb and a corresponding one of U-, V-, and W-phase second lower-arm switches SULb, SVLb, and SWLb.

In the present embodiment, each of the switches SUHa to SWLa and SUHb to SWLb is a voltage-controlled semiconductor switching element, and more specifically, is an IGBT. In this case, a high-side terminal of each of the switches SUHa to SWLa and SUHb to SWLb is a collector, and a low-side terminal thereof is an emitter. A freewheel diode is connected in anti-parallel to each of the switches SUHa to SWLb. Specifically, U-, V-, and W-phase first upper-arm diodes DUHa, DVHa, and DWHa are connected in anti-parallel to the U-, V-, and W-phase first upper-arm switches SUHa, SVHa, and SWHa, and U-, V-, and W-phase first lower-arm diodes DULa, DVLa, and DWLa are connected in anti-parallel to the U-, V-, and W-phase first lower-arm switches SULa, SVLa, and SWLa. U-, V-, and W-phase second upper-arm diodes DUHb, DVHb, and DWHb are connected in anti-parallel to the U-, V-, and W-phase second upper-arm switches SUHb, SVHb, and SWHb, and U-, V-, and W-phase second lower-arm diodes DULb, DVLb, and DWLb are connected in anti-parallel to the U-, V-, and W-phase second lower-arm switches SULb, SVLb, and SWLb.

The collectors of the respective-phase first upper-arm switches SUHa, SVHa, and SWHa and the collectors of the respective-phase second upper-arm switches SUHb, SVHb, and SWHb are connected via a positive-electrode-side bus 11, which is an electrical path such as a bus bar. The emitters of the respective-phase first lower-arm switches SULa, SVLa, and SWLa and the emitters of the respective-phase second lower-arm switches SULb, SVLb, and SWLb are connected via a negative-electrode-side bus 12, which is an electrical path such as a bus bar. The emitters of the respective-phase second lower-arm switches SULb, SVLb, and SWLb are connected to the negative-electrode-side bus 12.

The control system 100 includes a power switch 14. The power switch 14 may be, for example, a semiconductor switching element or a mechanical relay. The power switch 14 connects the positive-electrode-side bus 11 to a positive terminal of the battery 10. When turned on, the power switch 14 electrically connects the positive terminal of the battery 10 to collectors of the first upper-arm switches SUHa, SVHa, and SWHa of the respective phases. On the other hand, when turned off, the power switch 14 electrically disconnects the positive terminal of the battery 10 from the collectors of the first upper-arm switches SUHa, SVHa, and SWHa of the respective phases.

The control system 100 includes a capacitor 15. The capacitor 15 functions as a smoothing capacitor. The capacitor 15 is connected in parallel with series connections each including a first upper-arm switch SUHa, SVHa, or SWHa of a corresponding phase and a first lower-arm switch SULa, SVLa, or SWLa of the corresponding phase.

The rotating electric machine 40 is a vehicle prime mover that serves as a drive power source of the vehicle. The rotating electric machine 40 includes a rotor 41 and a stator 50. The rotor 41 is configured to transmit power to driving wheels of the vehicle. In the present embodiment, the rotating electric machine 40 is a permanent-magnet-field synchronous machine. The rotor 41 includes permanent magnets 42, for example, neodymium magnets, as field poles.

The stator 50 includes, as armature windings, a U-phase winding 51U, a V-phase winding 51V, and a W-phase winding 51W. The windings 51U, 51V, and 51W of the respective phases are arranged in a stator core constituting the stator 50 so as to be shifted from each other by 120 electrical degrees. The windings 51U, 51V, and 51W of the respective phases are open windings.

For each phase, an emitter of a corresponding one of the first upper-arm switches SUHa, SVHa, and SWHa and a collector of a corresponding one of the first lower-arm switches SULa, SVLa, and SWLa are connected to a corresponding one of first ends 51Ua, 51Va, and 51Wa of the windings 51U, 51V, and 51W. For each phase, an emitter of a corresponding one of the second upper-arm switches SUHb, SVHb, and SWHb and a collector of a corresponding one of the second lower-arm switches SULb, SVLb, and SWLb are connected to a corresponding one of second ends 51Ub, 51Vb, and 51Wb of the windings 51U, 51V, and 51W.

The control system 100 includes a changeover switch QH and a diode DH. The changeover switch QH is provided on the positive-electrode-side bus 11, which corresponds to a "target bus." The changeover switch QH may be, for example, a semiconductor switching element or a mechanical relay. The changeover switch QH of the present embodiment is an IGBT. The collector of the changeover switch QH is connected on a side closer to the first inverter 20, and the emitter of the changeover switch QH is connected on a side closer to the second inverter 30. The diode DH is connected in anti-parallel to the changeover switch QH.

When turned on, the changeover switch QH electrically connects collectors of the upper-arm switches SUHa, SVHa, and SWHa of the respective phases of the first inverter 20 to collectors of the upper-arm switches SUHb, SVHb, and SWHb of the respective phases of the second inverter 30. On the other hand, when turned off, the changeover switch QH electrically disconnects the collectors of the upper-arm switches SUHa, SVHa, and SWHa of the respective phases of the first inverter 20 from the collectors of the upper-arm switches SUHb, SVHb, and SWHb of the respective phases of the second inverter 30.

The control system 100 includes a current sensor 60, a rotation angle sensor 61, a voltage sensor 62, a temperature sensor 63, and an atmospheric pressure sensor 64.

The current sensor 60 detects phase currents flowing through the windings 51U, 51V, and 51W of the respective phases. In the present embodiment, the current sensor 60 is provided at one of two ends of each of the windings 51U, 51V, and 51W of the respective phases, the one end being located on the first inverter 20 side. Hereinafter, the sign of a phase current is defined as positive when, in each phase, current flows from a corresponding one of the first ends 51Ua, 51Va, and 51Wa of the windings 51U, 51V, and 51W to a corresponding one of the second ends 51Ub, 51Vb, and 51Wb. The sign of the phase current is defined as negative when the current flows from the corresponding one of the second ends 51Ub, 51Vb, and 51Wb to the corresponding one of the first ends 51Ua, 51Va, and 51Wa. The current sensor 60 may be provided at one of the two ends of each of the windings 51U, 51V, and 51W of the respective phases, the one end being located on the second inverter 30 side.

The rotation angle sensor 61 is, for example, a resolver, and detects an electrical angle of the rotor 41. The voltage sensor 62 detects a terminal-to-terminal voltage of the capacitor 15. The temperature sensor 63 detects a temperature of the rotating electric machine 40. For example, the temperature sensor 63 detects temperatures of the windings 51U, 51V, and 51W of the respective phases. The atmospheric pressure sensor 64 detects atmospheric pressure in an installation environment of the control system 100, more specifically, in an installation environment of the rotating electric machine 40.

Detected values from the sensors 60 to 64 are input to a control device 70 included in the control system 100. The control device 70 is an electronic control device (ECU) that performs various types of control of the control system 100, and includes a processor 71 and a storage unit 72 as hardware. In the control device 70, the processor 71 and the storage unit 72 are connected to each other via a communication bus 73. In the control system 100, each on-board device may be controlled by an ECU corresponding to the on-board device. However, in FIG. 1, for convenience, a plurality of ECUs are illustrated as one control device 70.

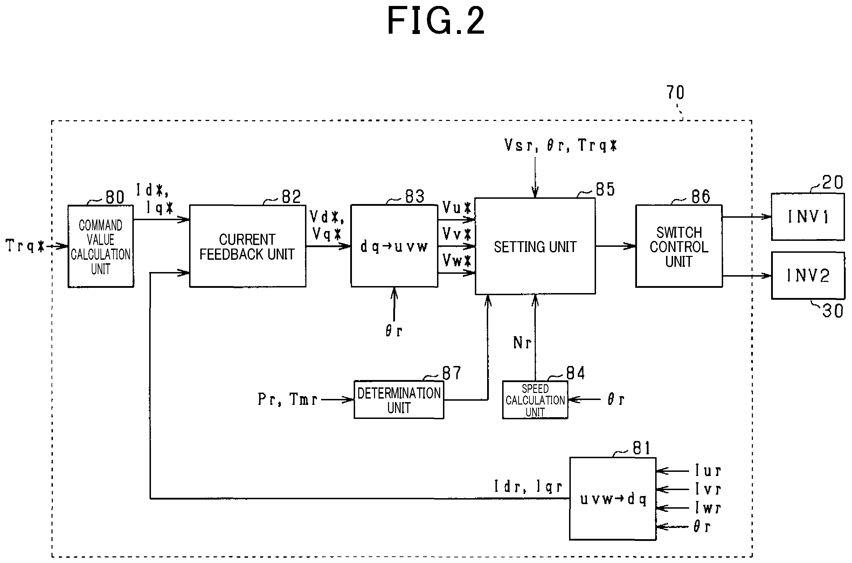

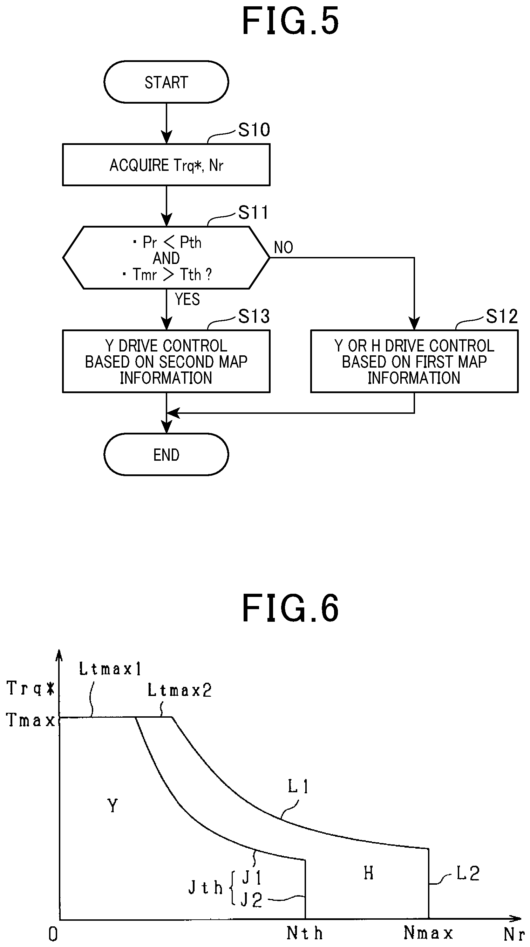

The storage unit 72 includes memory and storage as hardware. The memory is a storage device configured to store data used for processing by the control device 70. For example, the memory provides the processor 71 with a working area to be temporarily used when the processor 71 performs processing. The memory includes, for example, ROM or RAM. The storage is a storage device configured to store various programs to be read and executed by the processor 71 and data to be read by the processor 71, and is a non-transitory tangible storage medium. The storage includes, for example, an HDD or flash memory. The storage stores program information and the like for processes illustrated in FIGS. 2 and 5 and the like, which will be described later.

For example, program information stored in a non-transitory tangible storage medium is installed in the storage unit 72. The recording medium may be, for example, a USB memory, a CD-ROM, or a DVD. Program information transmitted via a communication network, for example by Over The Air (OTA), is installed in the storage unit 72.

FIG. 2 illustrates a block diagram of a control process for the rotating electric machine 40 performed by the control device 70.

A command value calculation unit 80 calculates a d-axis current command value Id* and a q-axis current command value Iq* in a dq coordinate system based on a command torque Trq* received from a higher-layer control device than the control device 70.

A two-phase conversion unit 81 calculates a d-axis current value Idr and a q-axis current value Iqr based on currents Iur, Ivr, and Iwr of the respective phases detected by the current sensor 60 and an electrical angle θr detected by the rotation angle sensor 61.

A current feedback unit 82 calculates a d-axis voltage command value Vd* and a q-axis voltage command value Vq* based on the d- and q-axis current command values Id* and Iq* and the d- and q-axis current values Idr and Iqr. Specifically, the current feedback unit 82 calculates a d-axis current deviation, which is a difference between the d-axis current command value Id* and the d-axis current value Idr, and calculates the d-axis voltage command value Vd* as a manipulated variable for performing feedback control so that the calculated d-axis current deviation becomes zero. The current feedback unit 82 calculates a q-axis current deviation, which is a difference between the q-axis current command value Iq* and the q-axis current value Iqr, and calculates the q-axis voltage command value Vq* as a manipulated variable for performing feedback control so that the calculated q-axis current deviation becomes zero. The feedback control may be, for example, proportional-integral control.

A three-phase conversion unit 83 calculates U-, V-, and W-phase voltage command values Vu*, Vv*, and Vw* based on d- and q-axis voltage command values Vd* and Vq* and the electrical angle θr. The U-, V-, and W-phase voltage command values Vu*, Vv*, and Vw* are command values of voltages applied to the U-, V-, and W-phase windings 51U, 51V, and 51W. In the present embodiment, the sign of the voltage applied to the winding of each phase is defined as positive when a potential of a corresponding one of the first ends 51Ua, 51Va, and 51Wa of the windings 51U, 51V, and 51W is higher than a potential of a corresponding one of the second ends 51Ub, 51Vb, and 51Wb. The sign of the voltage is defined as negative when the potential of the corresponding one of the second ends 51Ub, 51Vb, and 51Wb is higher than the potential of the corresponding one of the first ends 51Ua, 51Va, and 51Wa.

A speed calculation unit 84 calculates a rotational speed Nr of the rotor 41 based on the electrical angle θr.

A setting unit 85 selects whether a drive mode of the control system 100 is to be set to Y drive control or H drive control. In the present embodiment, the setting unit 85 selects whether Y drive control or H drive control is to be performed based on an operating point of the rotating electric machine 40 defined by the calculated rotational speed Nr and the command torque Trq* and based on control map information. The control map information is information in which a Y-drive-control region and an H-drive-control region are defined in association with the rotational speed Nr and the command torque Trq*. The control map information is stored in the storage unit 72.

The setting unit 85 generates drive signals for the switches SUHa to SWLa and SUHb to SWLb of the first and second inverters 20 and 30. Each drive signal includes a turn-on command and a turn-off command for a corresponding switch.

Specifically, the setting unit 85 calculates U-, V-, and W-phase normalized command values Dutyu, Dutyv, and Dutyw by normalizing U-, V-, and W-phase voltage command values Vu*, Vv*, and Vw* with respect to a power supply voltage Vsr, which is a voltage detected by the voltage sensor 62. More specifically, the U-, V-, and W-phase normalized command values Dutyu, Dutyv, and Dutyw are values calculated by dividing the U-, V-, and W-phase voltage command values Vu*, Vv*, and Vw* by one half of the power supply voltage Vsr.

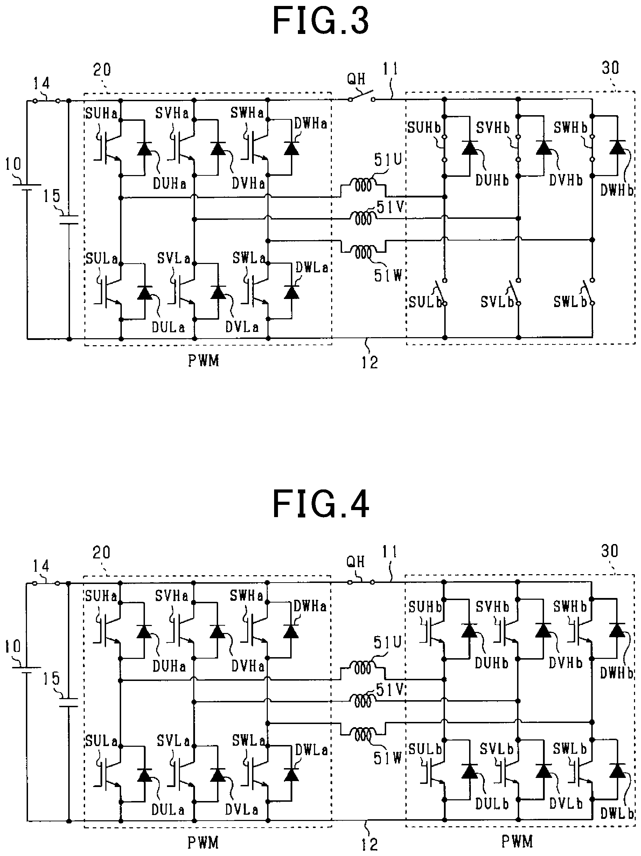

When selecting Y drive control, the setting unit 85 performs, as the Y drive control, control for turning off the changeover switch QH and PWM-driving the switches SUHa to SWLa of the first inverter 20, as illustrated in FIG. 3. The setting unit 85 also holds the upper-arm switches SUHb, SVHb, and SWHb of the respective phases of the second inverter 30 in an ON state and holds the lower-arm switches SULb, SVLb, and SWLb of the respective phases of the second inverter 30 in an OFF state. As a result, the windings 51U, 51V, and 51W of the respective phases are star-connected via the second inverter 30.

The setting unit 85 generates the drive signals for the switches SUHa to SWLa of the first inverter 20 based on comparison in magnitude between the U-, V-, and W-phase normalized command values Dutyu, Dutyv, and Dutyw and a carrier signal Sgc. The carrier signal Sgc may be, for example, a triangular wave signal having equal rising and falling slopes.

When selecting H drive control, the setting unit 85 performs, as the H drive control, control for turning on the changeover switch QH, PWM-driving the switches SUHa to SWLa of the first inverter 20, and PWM-driving the switches SUHb to SWLb of the second inverter 30, as illustrated in FIG. 4.

Specifically, the setting unit 85 generates the drive signals for the switches SUHa to SWLa of the first inverter 20 in the same manner as in the Y drive control, based on comparison in magnitude between the U-, V-, and W-phase normalized command values Dutyu, Dutyv, and Dutyw and a first carrier signal Sg1. The setting unit 85 generates the drive signals for the switches SUHb to SWLb of the second inverter 30 in the same manner as in the Y drive control, based on comparison in magnitude between the U-, V-, and W-phase normalized command values Dutyu, Dutyv, and Dutyw and a second carrier signal Sg2. The first and second carrier signals Sg1 and Sg2 may be, for example, triangular wave signals each having equal rising and falling slopes. The frequency, amplitude, and center level of the second carrier signal Sg2 are the same as the frequency, amplitude, and center level of the first carrier signal Sg1. The phase difference between the first carrier signal Sg1 and the second carrier signal Sg2 is 180°. In the present embodiment, the frequencies of the carrier signals Sg1 and Sg2 used in the H drive control are the same as the frequency of the carrier signal Sgc used in the Y drive control.

A switch control unit 86 includes drive circuits for the switches SUHa to SWLa and SUHb to SWLb. The switch control unit 86 controls charge/discharge currents for gates of the switches SUHa to SWLa and SUHb to SWLb of the first and second inverters 20 and 30 based on the generated drive signals. As a result, ON or OFF control of the switches SUHa to SWLa and SUHb to SWLb of the first and second inverters 20 and 30 is performed in accordance with the drive signals.

In the H drive control, the switches of each of the inverters 20 and 30 are switching-controlled in accordance with the drive signals such that the switching patterns are phase-shifted from each other by 120 electrical degrees between phases. In the Y drive control, switching patterns of the switches of the first inverter 20 that are subjected to switching control in accordance with the drive signals are shifted in phase from each other by 120 electrical degrees among the respective phases.

A potential difference between armature windings of two different phases is greater when the H drive control is performed than when the Y drive control is performed. When the H drive control is performed, the potential difference is relatively large. In this case, if dielectric strength between armature windings of two different phases is low, partial discharge is likely to occur between the armature windings of the two different phases. If partial discharge occurs, for example, deterioration of the rotating electric machine 40 may progress.

To inhibit occurrence of partial discharge, the rotating electric machine 40 may be designed to have dielectric strength sufficient for the potential difference expected when the H drive control is performed. However, in this case, an insulating coating covering conductive wires constituting the armature windings becomes thicker, and, for example, the output of the rotating electric machine 40 may decrease.

Here, occurrence of partial discharge can be inhibited by reducing a peak value of surge voltage generated in association with switching of the switching states of the inverters 20 and 30. Thus, in a situation where partial discharge is likely to occur, the control device 70 performs a process for reducing the peak value of the surge voltage.

As illustrated in FIG. 2, the control device 70 includes a determination unit 87. The determination unit 87 determines whether partial discharge is likely to occur between armature windings of two different phases. In the present embodiment, when determining that both first and second conditions are met, the determination unit 87 determines that the dielectric strength is low and that partial discharge is likely to occur.

The first condition is that an atmospheric pressure value Pr detected by the atmospheric pressure sensor 64 is lower than an atmospheric pressure threshold Pth. The atmospheric pressure threshold Pth may be set to, for example, a value less than one atmosphere, for example, 0. 6 to 0. 7 atmospheres. The second condition is that a temperature value Tmr detected by the temperature sensor 63 is higher than a temperature threshold Tth.

When the determination unit 87 determines that partial discharge is likely to occur, the setting unit 85 inhibits the H drive control from being set.

FIG. 5 is a flowchart illustrating a torque control routine for the rotating electric machine 40. The torque control routine illustrated in FIG. 5 is repeatedly performed by the processor 71 of the control device 70, for example, at a predefined control cycle.

At step S10, the command torque Trq* is acquired. The speed calculation unit 84 calculates the rotational speed Nr.

At step S11, the determination unit 87 determines whether both the first and second conditions are met.

If the determination unit 87 determines at step S11 that at least one of the first and second conditions is not met, the torque control routine proceeds to step S12. At step S12, the setting unit 85 selects either Y drive control or H drive control based on the command torque Trq*, the rotational speed Nr, and first map information, which is control map information.

FIG. 6 illustrates the first map information. In the first map information, an operating region of the rotating electric machine 40 is defined by a first maximum torque line Ltmax1, a second maximum torque line Ltmax2, a first line L1, a second line L2, an axis of the rotational speed Nr, hereinafter referred to as a horizontal axis, and an axis of the command torque Trq*, hereinafter referred to as a vertical axis. The first and second maximum torque lines Ltmax1 and Ltmax2 define a maximum torque Tmax, which is a maximum value of the command torque Trq*, and extend along the horizontal axis, specifically, parallel to the horizontal axis. The first maximum torque line Ltmax1 extends from the vertical axis. The second maximum torque line Ltmax2 extends from one end of the first maximum torque line Ltmax1 along the horizontal axis, specifically, parallel to the horizontal axis.

The first line L1 extends from one end of the second maximum torque line Ltmax2 and extends such that a value on the vertical axis decreases as the rotational speed Nr increases. The second line L2 extends from one end of the first line L1 to the horizontal axis along the vertical axis, specifically, parallel to the vertical axis. A value of the second line L2 on the horizontal axis is the maximum rotational speed Nmax, which is a maximum value of the rotational speed Nr.

A determination threshold Jth includes a first threshold line J1 and a second threshold line J2. The first threshold line J1 extends along the first line L1 from a boundary between the first maximum torque line Ltmax1 and the second maximum torque line Ltmax2. The first threshold line J1 extends such that a value on the vertical axis decreases as the rotational speed Nr increases. The second threshold line J2 extends from one end of the first threshold line J1 along the second line L2, specifically, parallel to the second line L2. A value of the second threshold line J2 on the horizontal axis is a determination speed Nth, which is lower than the maximum rotational speed Nmax and greater than zero.

A portion of the operating region in which the rotational speed Nr is equal to or lower than the determination threshold Jth is a Y-drive-control region. A portion of the operating region in which the rotational speed Nr exceeds the determination threshold Jth is an H-drive-control region.

When determining that an operating point defined by the command torque Trq* and the rotational speed Nr acquired at step S10 is in the Y-drive-control region, the setting unit 85 selects the Y drive control. In the present embodiment, the Y drive control is performed so that a field-weakening current caused to flow through the windings 51U, 51V, and 51W of the respective phases is zero. When determining that the operating point is in the H-drive-control region, the setting unit 85 selects the H drive control.

If the determination unit 87 determines at step S11 that both the first and second conditions are met, the torque control routine proceeds to step S13, and the setting unit 85 switches the control map information from the first map information to second map information.

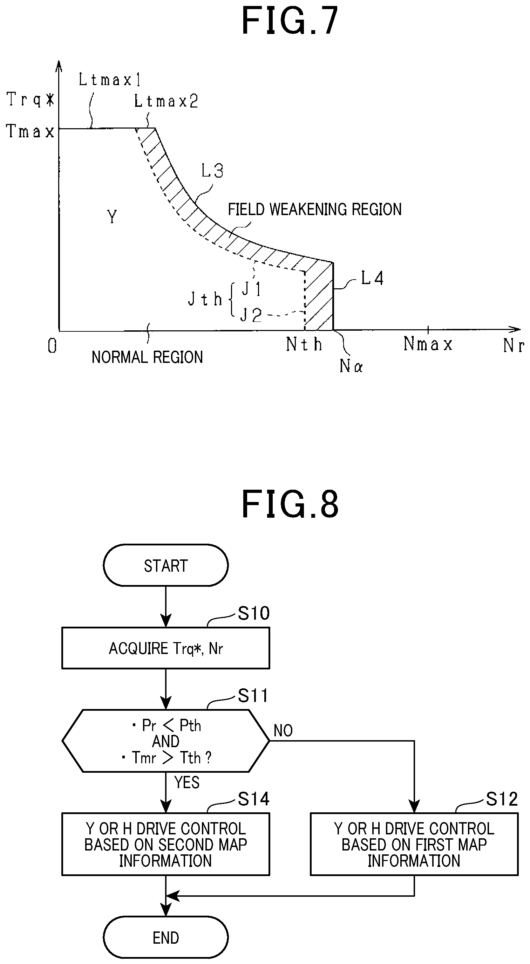

FIG. 7 illustrates the second map information. In the second map information, the second maximum torque line Ltmax2 is shorter than the second maximum torque line Ltmax2 in the first map information. In the second map information, an operating region of the rotating electric machine 40 is defined by the first maximum torque line Ltmax1, the second maximum torque line Ltmax2, a third line L3, a fourth line L4, the horizontal axis, and the vertical axis. The entire operating region is the Y-drive-control region. Thus, at step S13, a restriction for inhibiting setting of the H drive control is imposed, and the Y drive control is selected.

The third line L3 extends from one end of the second maximum torque line Ltmax2 along the first line L1. The fourth line L4 extends from one end of the third line L3 to the horizontal axis along the second line L2, specifically, parallel to the second line L2. The value of the fourth line L4 on the horizontal axis is higher than the determination speed Nth and lower than the maximum rotational speed Nmax.

In the second map information, the determination threshold Jth is the same as that in the first map information. A region surrounded by the determination threshold Jth, the second maximum torque line Ltmax2, the third line L3, the fourth line L4, and the horizontal axis is defined as a field-weakening region. The field-weakening region is a portion of the operating region defined by the second map information that is higher than the determination threshold Jth. A portion of the operating region that is equal to or lower than the determination threshold Jth is defined as a normal region.

When determining that the operating point defined by the command torque Trq* and the rotational speed Nr acquired at step S10 is in the normal region, the setting unit 85 performs the Y drive control so that a field-weakening current caused to flow through the windings 51U, 51V, and 51W of the respective phases is zero.

When determining that the operating point is in the field-weakening region, the setting unit 85 performs the Y drive control so that a field-weakening current flows through the windings 51U, 51V, and 51W of the respective phases. When the rotating electric machine 40 is a salient-pole machine, the field-weakening current enables the torque of the rotating electric machine 40 to be further increased or the rotational speed Nr to be further increased when the operating point is in a region in which the H drive control is to be performed.

According to the present embodiment described above, the H drive control is inhibited in a situation where partial discharge is likely to occur. This makes it possible to inhibit an increase in a peak value of a surge voltage caused by a change in switching states, and to inhibit occurrence of partial discharge.

### <Second Embodiment>

A second embodiment will be described below with reference to the accompanying drawings, mainly with respect to differences from the first embodiment. In the present embodiment, the second map information is modified relative to the second map information of the first embodiment, and the method for restricting the H drive control is changed.

FIG. 8 is a flowchart illustrating a torque control routine for the rotating electric machine 40. The torque control routine illustrated in FIG. 8 is repeatedly performed by the processor 71 of the control device 70, for example, at a predefined control cycle.

If the answer is YES at step S11, the torque control routine proceeds to step S14, and the control map information is switched from the first map information to second map information.

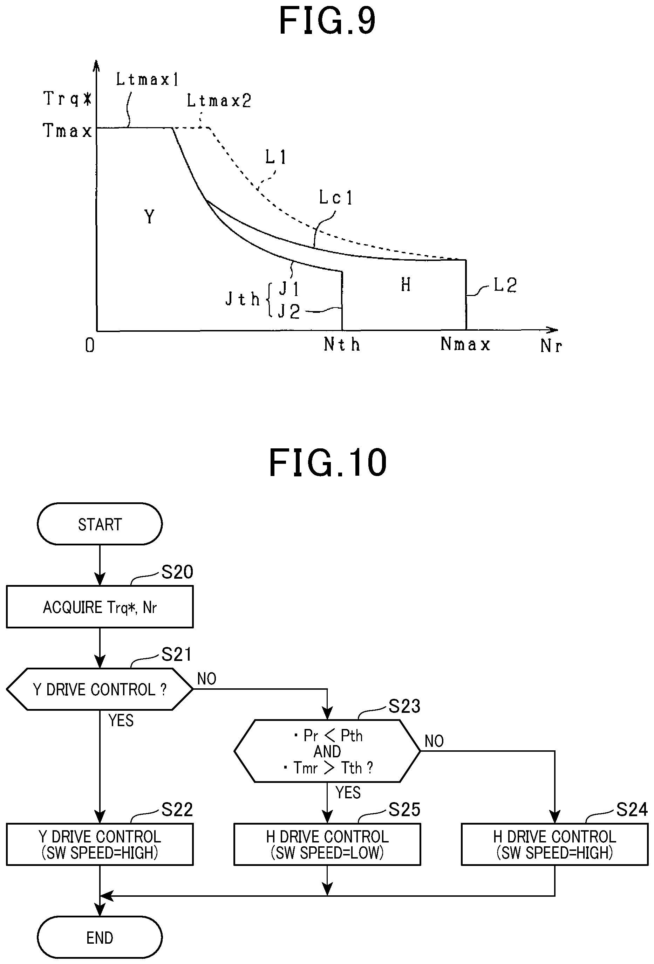

FIG. 9 illustrates the second map information of the present embodiment. In the second map information, a line defining a high-torque-side boundary of the H-drive-control region is changed from the second maximum torque line Ltmax2 and the first line L1 to a first changed line Lc1. The first changed line Lc1 extends from an intermediate position of the first threshold line J1 to one end of the second line L2. A region surrounded by the first changed line Lc1, the second line L2, the horizontal axis, and the determination threshold Jth is the H-drive-control region in the second map information.

The first changed line Lc1 extends such that a value on the vertical axis decreases as the rotational speed Nr increases. The first changed line Lc1 is located on a lower-torque side than the first line L1. Thus, at step S14, a restriction is imposed such that, among boundaries of the H-drive-control region, a high-torque-side boundary is shifted to a lower-torque side relative to that in the first map information. As a result, a magnitude of a current vector flowing through the windings 51U, 51V, and 51W of the respective phases in the H drive control can be reduced. This makes it possible to inhibit an increase in a peak value of a surge voltage generated in association with switching of switching states, and to inhibit occurrence of partial discharge.

### <Third Embodiment>

A third embodiment will be described below with reference to the accompanying drawings, mainly with respect to differences from the first embodiment. In the present embodiment, a process for reducing switching speeds of the switches of the first and second inverters 20 and 30 is performed as a process for restricting the H drive control.

FIG. 10 is a flowchart illustrating a torque control routine for the rotating electric machine 40. The torque control routine illustrated in FIG. 10 is repeatedly performed by the processor 71, for example, at a predefined control cycle.

At step S20, the command torque Trq* is acquired. The speed calculation unit 84 calculates the rotational speed Nr.

At step S21, the setting unit 85 determines an operating point based on the acquired command torque Trq* and rotational speed Nr. The setting unit 85 then determines whether the operating point is in the Y-drive-control region or the H-drive-control region based on the first map information illustrated in FIG. 6.

If it is determined at step S21 that the operating point is in the Y-drive-control region, the torque control routine proceeds to step S22, and the Y drive control is performed.

If it is determined at step S21 that the operating point is in the H-drive-control region, the torque control routine proceeds to step S23, and the determination unit 87 determines whether both the first and second conditions are met.

If it is determined at step S23 that at least one of the first and second conditions is not met, the torque control routine proceeds to step S24, and the H drive control is performed.

If it is determined at step S23 that both the first and second conditions are met, the torque control routine proceeds to step S25. At step S25, the H drive control is performed to reduce a switching speed at which the switches SUHa to SWLb of the inverters 20 and 30 are turned on and off relative to steps S24 and S22. This makes it possible to reduce a peak value of a surge voltage caused by a change in switching states. As a result, occurrence of partial discharge can be inhibited in a situation where dielectric strength is low.

An example of a drive circuit that reduces the switching speed will be described.

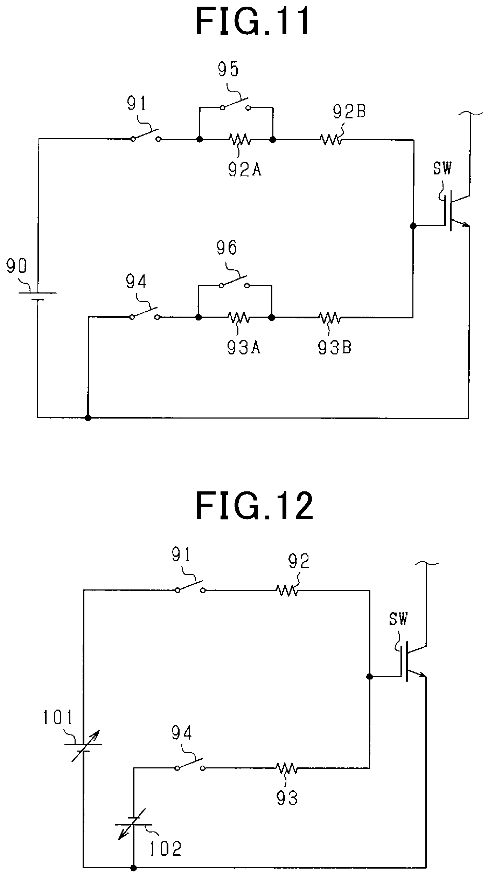

First, a first example will be described. The drive circuit of the first example reduces the switching speed by changing a resistance value of a gate resistor. A specific example of the drive circuit is illustrated in FIG. 11. The drive circuits for the switches SUHa to SWLb of the first and second inverters 20 and 30 basically have the same configuration. SW illustrated in FIG. 11 is a switch of an inverter.

The drive circuit includes a voltage source 90, a charging switch 91, a first charging resistor 92A, and a second charging resistor 92B. A positive terminal of the voltage source 90 is connected, via the charging switch 91, to a first end of a series connection of the first and second charging resistors 92A and 92B. A gate of the switch SW is connected to a second end of the series connection of the first and second charging resistors 92A and 92B.

The drive circuit includes a first discharging resistor 93A, a second discharging resistor 93B, and a discharging switch 94. The gate of the switch SW is connected to a first end of a series connection of the first and second discharging resistors 93A and 93B. A negative terminal of the voltage source 90 and an emitter of the switch SW are connected, via the discharging switch 94, to a second end of the series connection of the first and second discharging resistors 93A and 93B.

The drive circuit includes a charging bypass switch 95 and a discharging bypass switch 96. The charging bypass switch 95 is connected in parallel with the first charging resistor 92A. The discharging bypass switch 96 is connected in parallel with the first discharging resistor 93A.

When the drive signal is an ON command, the setting unit 85 performs a charging process. The charging process is a process of turning on the charging switch 91 and turning off the discharging switch 94. According to the charging process, a gate voltage of the switch SW becomes equal to or higher than a threshold voltage of the switch SW, and the switch SW is turned on.

When the drive signal is an OFF command, the setting unit 85 performs a discharging process. The discharging process is a process of turning off the charging switch 91 and turning on the discharging switch 94. According to the discharging process, the gate voltage of the switch SW falls below the threshold voltage Vth, and the switch SW is turned off.

In the charging process at steps S22 and S24 in FIG. 10, the setting unit 85 turns on the charging bypass switch 95. This reduces a gate resistance value between the voltage source 90 and the gate of the switch SW, thereby increasing a switching speed when the switch SW is turned on. In the charging process at step S25 in FIG. 10, the setting unit 85 turns off the charging bypass switch 95. This increases the gate resistance value between the voltage source 90 and the gate of the switch SW, thereby reducing a gate charging current. As a result, the switching speed when the switch SW is turned on decreases.

In the discharging process at steps S22 and S24, the setting unit 85 turns on the discharging bypass switch 96. This reduces a gate resistance value between the gate and the emitter of the switch SW, thereby increasing a switching speed when the switch SW is turned off. In the discharging process at step S25, the setting unit 85 turns off the discharging bypass switch 96. This increases the gate resistance value between the gate and the emitter of the switch SW, thereby reducing a gate discharging current. As a result, the switching speed when the switch SW is turned off decreases.

Next, a second example will be described. The drive circuit of the second example reduces the switching speed by changing an output voltage of a voltage source. A specific example of the drive circuit is illustrated in FIG. 12.

The drive circuit includes a first voltage source 101, a charging switch 91, a charging resistor 92, a discharging resistor 93, a discharging switch 94, and a second voltage source 102. A negative terminal of the second voltage source 102 is connected to the gate of the switch SW via the discharging resistor 93 and the discharging switch 94. A positive terminal of the second voltage source 102 is connected to a negative terminal of the first voltage source 101 and the emitter of the switch SW. The first voltage source 101 and the second voltage source 102 can vary their output voltages.

In the charging process at steps S22 and S24 in FIG. 10, the setting unit 85 sets the output voltage of the first voltage source 101 to a first charging voltage VcH. In the charging process at step S25 in FIG. 10, the setting unit 85 sets the output voltage of the first voltage source 101 to a second charging voltage VcL, which is lower than the first charging voltage VcH. This reduces the gate charging current. As a result, the switching speed of the switch SW in the charging process at step S25 becomes lower than the switching speed of the switch SW in the charging process at steps S22 and S24.

In the discharging process at steps S22 and S24, the setting unit 85 sets the output voltage of the second voltage source 102 to a first discharging voltage VdH. In the discharging process at step S25, the setting unit 85 sets the output voltage of the second voltage source 102 to a second discharging voltage VdL, which is lower than the first discharging voltage VdH. This reduces the gate discharging current. As a result, the switching speed of the switch SW in the discharging process at step S25 becomes lower than the switching speed of the switch SW in the discharging process at steps S22 and S24.

Although the drive circuit that reduces both the turn-on switching speed and the turn-off switching speed has been described, the drive circuit may reduce either the turn-on switching speed or the turn-off switching speed.

### <Fourth Embodiment>

A fourth embodiment will be described below with reference to the accompanying drawings, mainly with respect to differences from the third embodiment. In the present embodiment, a process for changing a switching order of the switches of the first and second inverters 20 and 30 is performed as a process for restricting the H drive control.

In the present embodiment, in both the Y drive control and the H drive control, a switching speed of each of the first upper-arm and lower-arm switches SUHa to SWLa of the respective phases is set higher than a switching speed of each of the second upper-arm and lower-arm switches SUHb to SWLb of the respective phases.

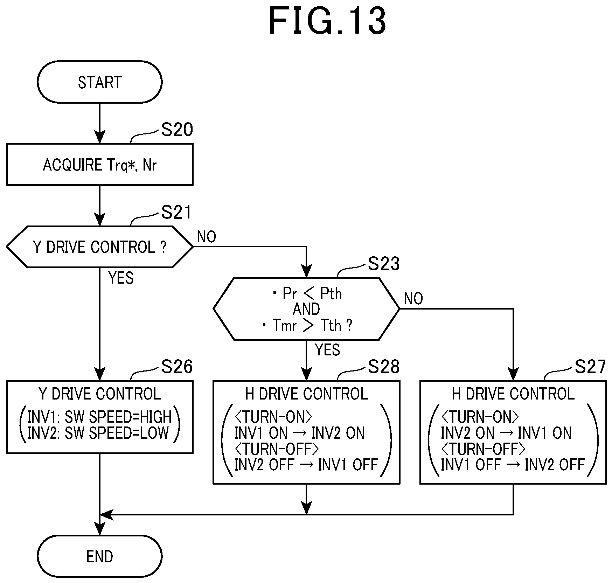

FIG. 13 is a flowchart illustrating a torque control routine for the rotating electric machine 40. The torque control routine illustrated in FIG. 13 is repeatedly performed by the processor 71, for example, at a predefined control cycle.

If it is determined at step S21 that the operating point is in the Y-drive-control region, the torque control routine proceeds to step S26, and the Y drive control is performed.

If it is determined at step S23 that at least one of the first and second conditions is not met, the torque control routine proceeds to step S27, and the H drive control is performed in a situation where dielectric strength is relatively high. If it is determined at step S23 that both the first and second conditions are met, the torque control routine proceeds to step S28, and the H drive control is performed in a situation where dielectric strength is relatively low.

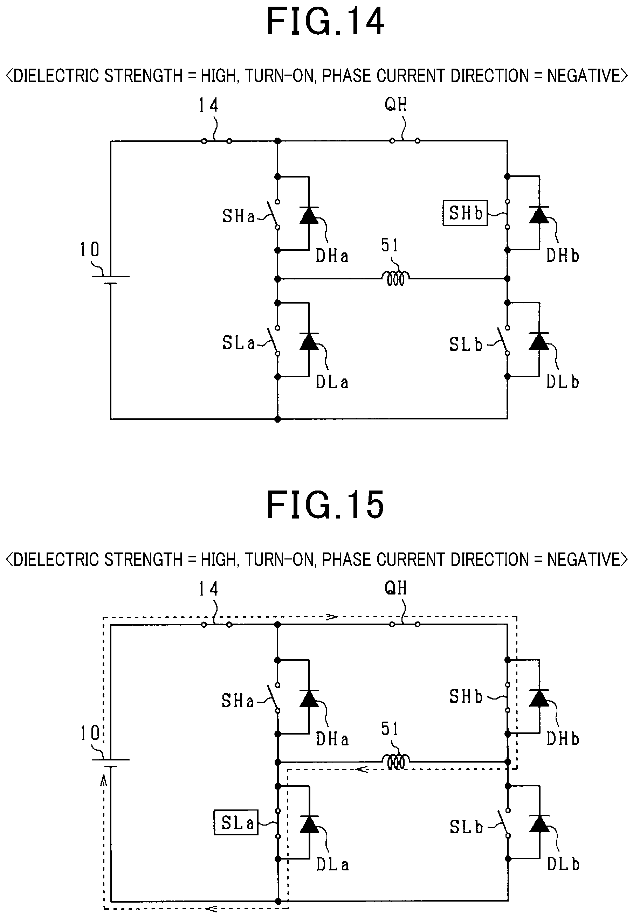

First, the H drive control at step S27 will be described with reference to FIGS. 14 to 21. FIGS. 14 to 21 and FIGS. 22 to 29 described later illustrate only a one-phase configuration in the control system 100. Therefore, the signs U, V, and W that identify the phases are omitted from the reference signs of the components.

A case where current flows through the armature winding 51 in a "negative" direction will be described with reference to FIGS. 14 to 17. As illustrated in FIGS. 14 and 15, the setting unit 85 generates drive signals for switching the second upper-arm switch SHb to ON and then switching the first lower-arm switch SLa to ON. This enables current to flow through the armature winding 51 by turn-on of the first lower-arm switch SLa, which has a switching speed relatively higher than that of the second upper-arm switch SHb, thereby reducing switching loss.

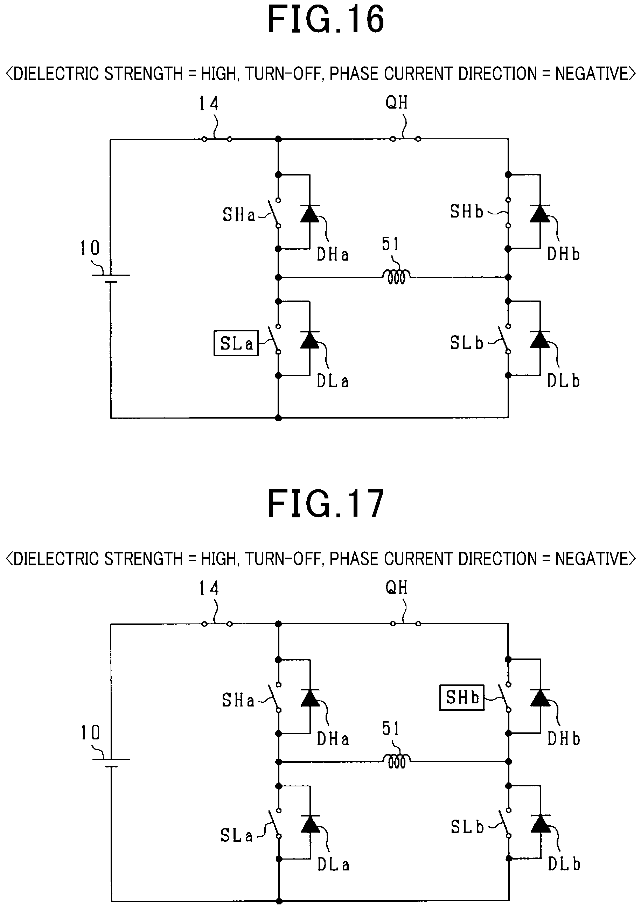

Thereafter, as illustrated in FIGS. 16 and 17, the setting unit 85 generates drive signals for switching the first lower-arm switch SLa to OFF and then switching the second upper-arm switch SHb to OFF. This enables current flowing through the armature winding 51 to be interrupted by turn-off of the first lower-arm switch SLa, which has a switching speed relatively higher than that of the second upper-arm switch SHb, thereby reducing switching loss.

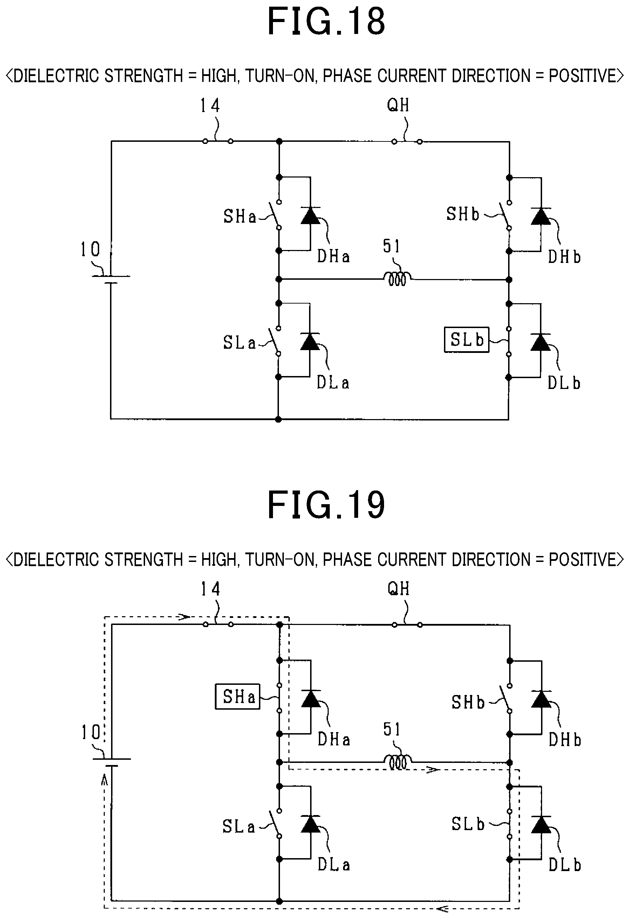

A case where current flows through the armature winding 51 in a "positive" direction will be described with reference to FIGS. 18 to 21. As illustrated in FIGS. 18 and 19, the setting unit 85 generates drive signals for switching the second lower-arm switch SLb to ON and then switching the first upper-arm switch SHa to ON. This enables current to flow through the armature winding 51 by turn-on of the first upper-arm switch SHa, which has a switching speed relatively higher than that of the second lower-arm switch SLb, thereby reducing switching loss.

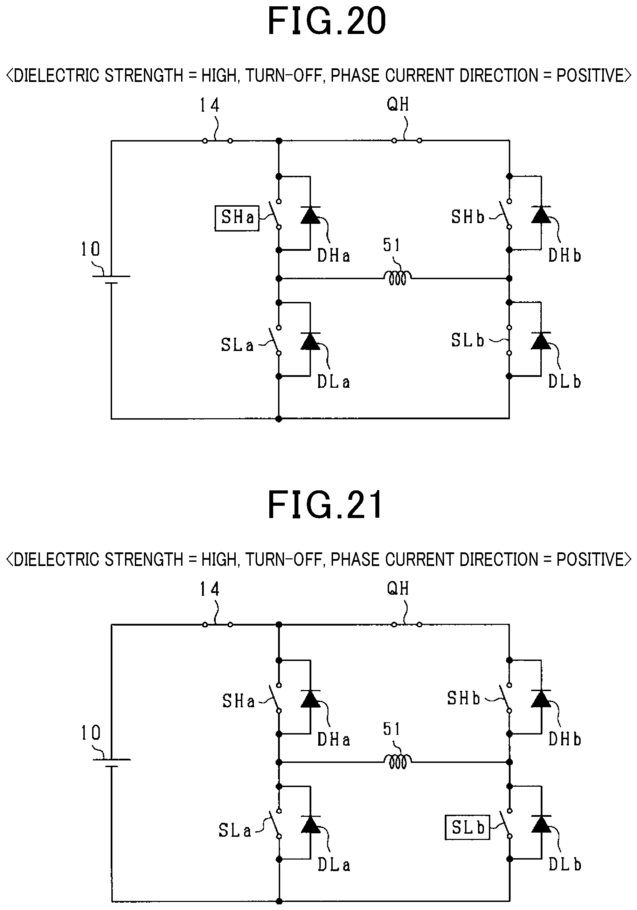

Thereafter, as illustrated in FIGS. 20 and 21, the setting unit 85 generates drive signals for switching the first upper-arm switch SHa to OFF and then switching the second lower-arm switch SLb to OFF. This enables current flowing through the armature winding 51 to be interrupted by turn-off of the first upper-arm switch SHa, which has a switching speed relatively higher than that of the second lower-arm switch SLb, thereby reducing switching loss.

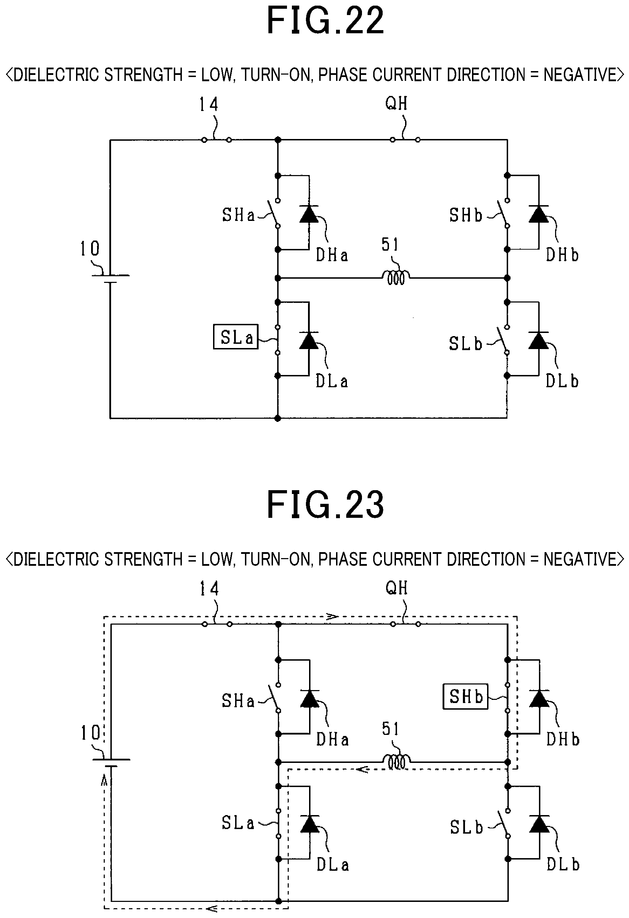

Next, the H drive control at step S28 will be described with reference to FIGS. 22 to 29.

A case where current flows through the armature winding 51 in the "negative" direction will be described with reference to FIGS. 22 to 25. As illustrated in FIGS. 22 and 23, the setting unit 85 generates drive signals for switching the first lower-arm switch SLa to ON and then switching the second upper-arm switch SHb to ON. This causes current to flow through the armature winding 51 by turn-on of the second upper-arm switch SHb, which has a switching speed relatively lower than that of the first lower-arm switch SLa. As a result, although there is a restriction in that switching loss increases as compared with step S27, a peak value of a surge voltage caused by turn-on can be reduced, and occurrence of partial discharge can be inhibited.

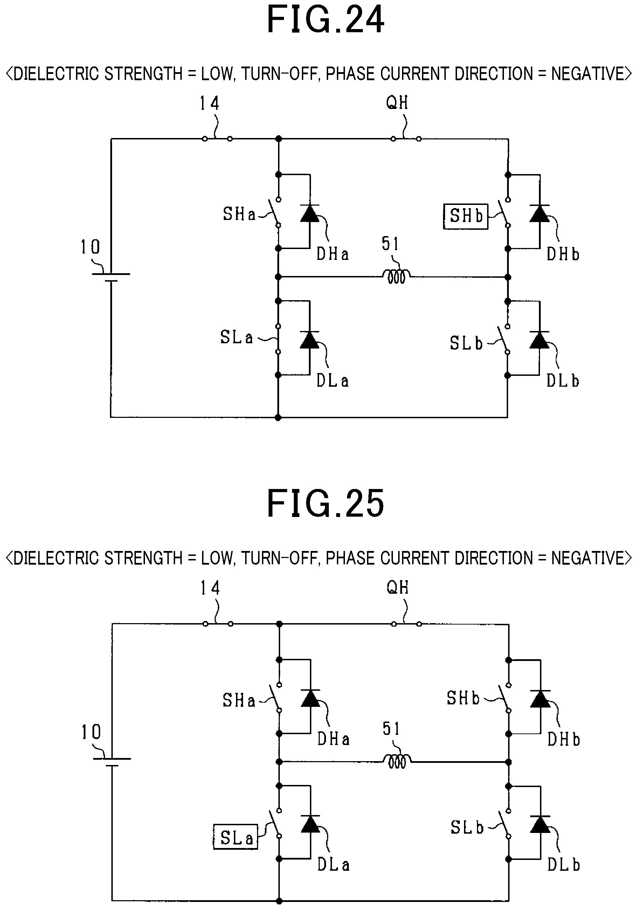

Thereafter, as illustrated in FIGS. 24 and 25, the setting unit 85 generates drive signals for switching the second upper-arm switch SHb to OFF and then switching the first lower-arm switch SLa to OFF. This interrupts current flowing through the armature winding 51 by turn-off of the second upper-arm switch SHb, which has a switching speed relatively lower than that of the first lower-arm switch SLa. As a result, a peak value of a surge voltage caused by turn-off can be reduced.

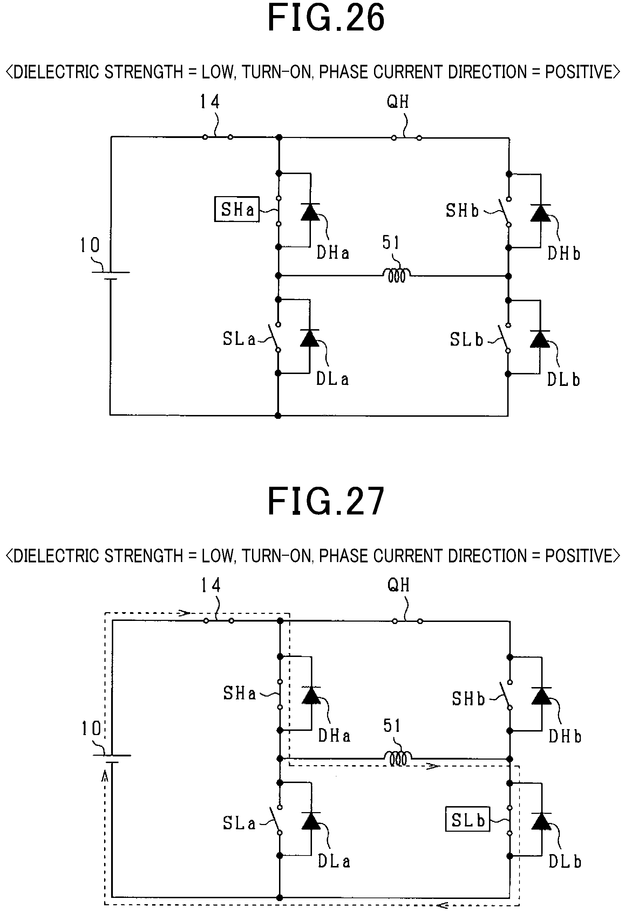

A case where current flows through the armature winding 51 in the "positive" direction will be described with reference to FIGS. 26 to 29. As illustrated in FIGS. 26 and 27, the setting unit 85 generates drive signals for switching the first upper-arm switch SHa to ON and then switching the second lower-arm switch SLb to ON. This causes current to flow through the armature winding 51 by turn-on of the second lower-arm switch SLb, which has a switching speed relatively lower than that of the first upper-arm switch SHa. As a result, a peak value of a surge voltage caused by turn-on can be reduced.

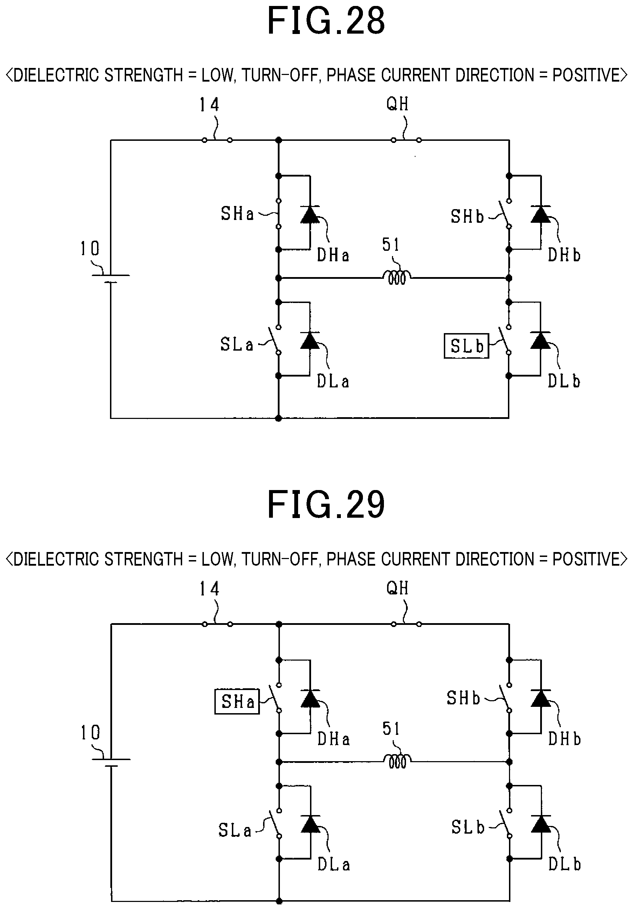

Thereafter, as illustrated in FIGS. 28 and 29, the setting unit 85 generates drive signals for switching the second lower-arm switch SLb to OFF and then switching the first upper-arm switch SHa to OFF. This interrupts current flowing through the armature winding 51 by turn-off of the second lower-arm switch SLb, which has a switching speed relatively lower than that of the first upper-arm switch SHa. As a result, a peak value of a surge voltage caused by turn-off can be reduced.

In the processes described with reference to FIGS. 14 to 29, the setting unit 85 may determine the direction of the phase current of each phase based on, for example, a detected value of the current sensor 60.

According to the present embodiment described above, a peak value of a surge voltage can be reduced, and occurrence of partial discharge can be inhibited.

### <Fifth Embodiment>

A fifth embodiment will be described below with reference to the accompanying drawings, mainly with respect to differences from the fourth embodiment. In the present embodiment, a process for changing switching frequencies of the switches of the first and second inverters 20 and 30 is performed as a process for restricting the H drive control.

Also in the present embodiment, in both the Y drive control and the H drive control, a switching speed of each of the first upper-arm and lower-arm switches SUHa to SWLa of the respective phases is set higher than a switching speed of each of the second upper-arm and lower-arm switches SUHb to SWLb of the respective phases.

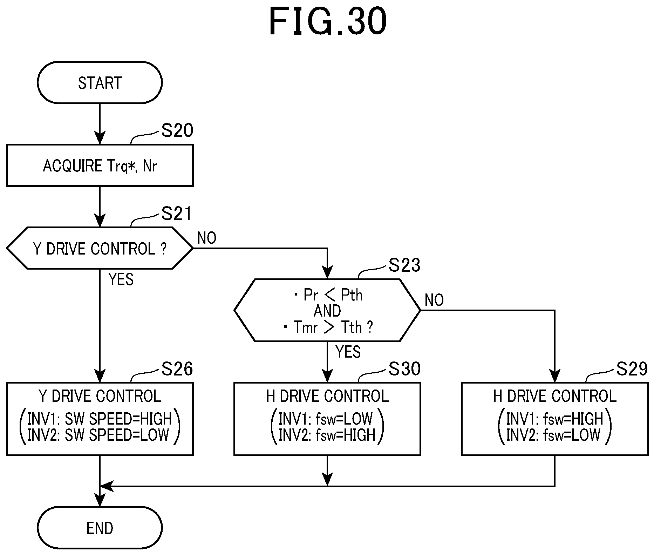

FIG. 30 is a flowchart illustrating a torque control routine for the rotating electric machine 40. The torque control routine illustrated in FIG. 30 is repeatedly performed by the processor 71, for example, at a predefined control cycle.

If it is determined at step S23 that at least one of the first and second conditions is not met, the torque control routine proceeds to step S29, and the H drive control is performed in a situation where dielectric strength is relatively high. If it is determined at step S23 that both the first and second conditions are met, the torque control routine proceeds to step S30, and the H drive control is performed in a situation where dielectric strength is relatively low.

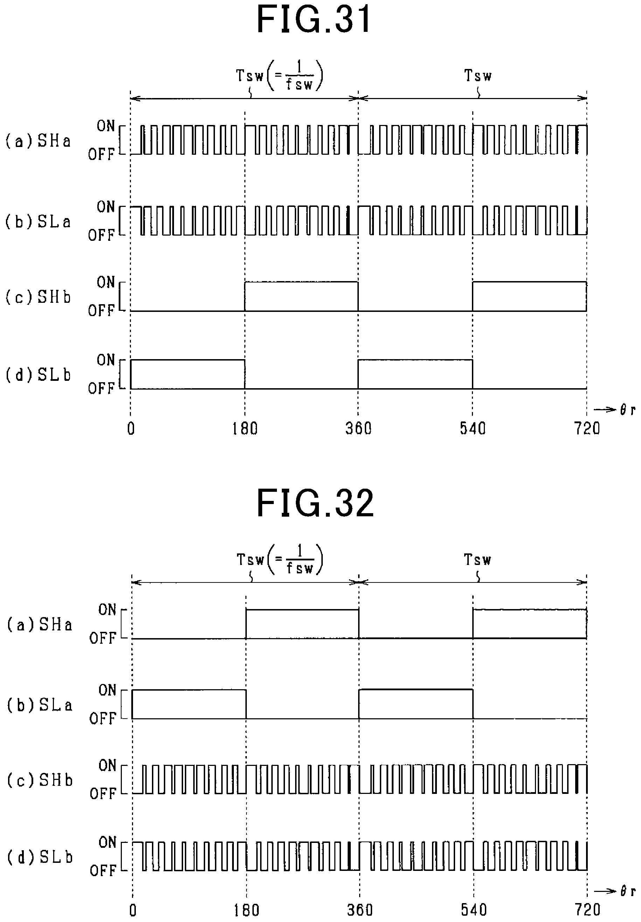

First, the H drive control at step S29 will be described with reference to FIG. 31. FIG. 31 and FIG. 32 described later illustrate waveforms for only one phase in the control system 100. Therefore, the signs U, V, and W that identify the phases are omitted from the reference signs of the components.

FIG. 31 illustrates transitions of switching states of the first upper-arm and lower-arm switches SHa and SLa and transitions of switching states of the second upper-arm and lower-arm switches SHb and SLb. In FIG. 31, Tsw indicates one switching cycle of each of the switches SHa, SLa, SHb, and SLb, and fsw indicates a switching frequency of each of the switches SHa, SLa, SHb, and SLb, which is 1/Tsw.

In each phase, the setting unit 85 sets a switching frequency of the first upper-arm and lower-arm switches SHa and SLa to be higher than a switching frequency of the second upper-arm and lower-arm switches SHb and SLb. In the example illustrated in FIG. 31, the setting unit 85 generates drive signals for switching the switching states of the second upper-arm and lower-arm switches SHb and SLb every 180 electrical degrees and switching the switching states of the first upper-arm and lower-arm switches SHa and SLa at cycles shorter than 180 electrical degrees.

The switching frequency of the second upper-arm and lower-arm switches SHb and SLb, which have relatively low switching speeds, is set lower than the switching frequency of the first upper-arm and lower-arm switches SHa and SLa, which have relatively high switching speeds. This makes it possible to reduce switching loss of the second inverter 30.

Next, the H drive control at step S30 will be described with reference to FIG. 32.

In each phase, the setting unit 85 sets the switching frequency of the first upper-arm and lower-arm switches SHa and SLa to be lower than the switching frequency of the second upper-arm and lower-arm switches SHb and SLb. In the example illustrated in FIG. 31, the setting unit 85 generates drive signals for switching the switching states of the first upper-arm and lower-arm switches SHa and SLa every 180 electrical degrees and for switching the switching states of the second upper-arm and lower-arm switches SHb and SLb at intervals shorter than 180 electrical degrees.

The switching frequency of the first upper-arm and lower-arm switches SHa and SLa, which have relatively high switching speeds, is set lower than the switching frequency of the second upper-arm and lower-arm switches SHb and SLb, which have relatively low switching speeds. This makes it possible, in the first inverter 20, to reduce a peak value of a surge voltage caused by a change in switching states, and to inhibit occurrence of partial discharge.

### <Sixth Embodiment>

A sixth embodiment will be described below with reference to the accompanying drawings, mainly with respect to differences from the first embodiment. In the present embodiment, a process for lengthening intervals between switching timings of switching states in the first and second inverters 20 and 30 is performed as a process for restricting the H drive control.

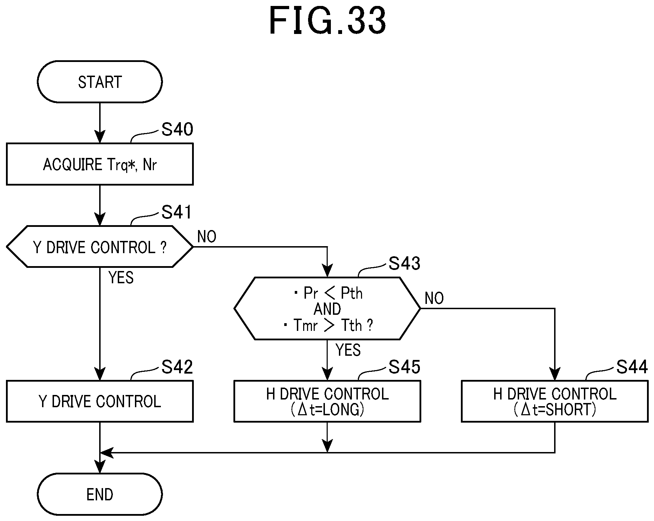

FIG. 33 is a flowchart illustrating a torque control routine for the rotating electric machine 40. The torque control routine illustrated in FIG. 33 is repeatedly performed by the processor 71, for example, at a predefined control cycle.

At step S40, the command torque Trq* is acquired. The speed calculation unit 84 calculates the rotational speed Nr.

At step S41, the setting unit 85 determines whether an operating point defined by the acquired command torque Trq* and rotational speed Nr is in the Y-drive-control region or the H-drive-control region based on the acquired command torque Trq* and rotational speed Nr and the first map information illustrated in FIG. 6.

If it is determined at step S41 that the operating point is in the Y-drive-control region, the torque control routine proceeds to step S42, and the Y drive control is performed.

If it is determined at step S41 that the operating point is in the H-drive-control region, the torque control routine proceeds to step S43, and the determination unit 87 determines whether both the first and second conditions are met.

If it is determined at step S43 that at least one of the first and second conditions is not met, the torque control routine proceeds to step S44, and the H drive control is performed in a situation where dielectric strength is relatively high. If it is determined at step S43 that both the first and second conditions are met, the torque control routine proceeds to step S45, and the H drive control is performed in a situation where dielectric strength is relatively low.

First, the H drive control at step S44 will be described.

The setting unit 85 generates drive signals for the switches SUHa to SWLb while imposing a condition that, among switching timings of switching states of the first upper-arm and lower-arm switches SUHa to SWLa of the respective phases and the second upper-arm and lower-arm switches SUHb to SWLb of the respective phases, an interval Δt between temporally adjacent switching timings is equal to or greater than a threshold α. The threshold α may be, for example, several microseconds and, specifically, may be set to satisfy "1.5 µsec ≤ α ≤ 4 µsec," "1.5 µsec ≤ α ≤ 3 µsec," or "2 µsec ≤ α ≤ 3 µsec."

Here, among the switches SUHa to SWLb of the first and second inverters 20 and 30, that is, twelve switches, two switches whose switching-state switching timings are temporally adjacent are referred to as A and B switches. The interval between temporally adjacent switching timings includes:
an interval between a timing at which the A switch is switched to OFF and a timing at which the B switch is switched to OFF;
an interval between a timing at which the A switch is switched to ON and a timing at which the B switch is switched to ON;
an interval between a timing at which the A switch is switched to OFF and a timing at which the B switch is switched to ON; and
an interval between a timing at which the A switch is switched to ON and a timing at which the B switch is switched to OFF. The combination of the A and B switches is:
   two switches among the six switches constituting the first inverter 20;
   two switches among the six switches constituting the second inverter 30; or
   one switch among the six switches constituting the first inverter 20 and one switch among the six switches constituting the second inverter 30.

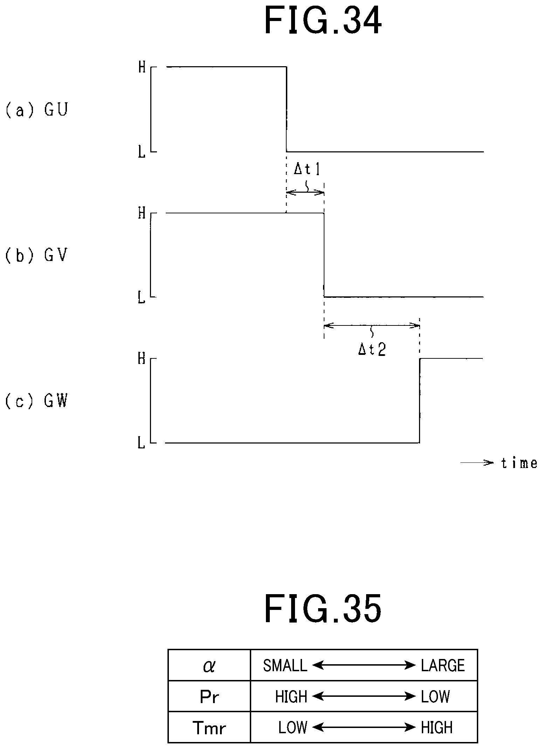

FIG. 34 illustrates an example in which, when a combination of first and second switches is two switches constituting the first inverter 20, a timing at which the first switch is switched to OFF and a timing at which the second switch is switched to OFF are temporally consecutive. In FIG. 34(a), "GU=H" indicates that the U-phase first upper-arm switch SUHa is turned on, and "GU=L" indicates that the U-phase first upper-arm switch SUHa is turned off. In FIG. 34(b), "GV=H" indicates that the V-phase first upper-arm switch SVHa is turned on, and "GV=L" indicates that the V-phase first upper-arm switch SVHa is turned off. In FIG. 34(c), "GW=H" indicates that the W-phase first upper-arm switch SWHa is turned on, and "GW=L" indicates that the W-phase first upper-arm switch SWHa is turned off.

In FIG. 34, Δt1 indicates an interval between a timing at which the U-phase first upper-arm switch SUHa is switched to OFF and a timing at which the V-phase first upper-arm switch SVHa is switched to OFF. Δt2 indicates an interval between a timing at which the V-phase first upper-arm switch SVHa is switched to OFF and a timing at which the W-phase first upper-arm switch SWHa is switched to OFF.

Next, the H drive control at step S45 will be described mainly with respect to changes from step S44.

The setting unit 85 sets the threshold α to be greater than the threshold α used at step S44. This makes it possible to lengthen a time interval between timings at which a surge voltage reaches a peak value, and to inhibit occurrence of partial discharge.

At step S45, as illustrated in FIG. 35, the setting unit 85 may set the threshold α to be greater as the atmospheric-pressure detected value Pr becomes lower or as the temperature detected value Tmr becomes higher. This makes it possible to suitably inhibit occurrence of partial discharge.

### <Modification to Sixth Embodiment >

At step S45, the setting unit 85 may perform either one of a process of setting the threshold α to be greater as the atmospheric-pressure detected value Pr becomes lower and a process of setting the threshold α to be greater as the temperature detected value Tmr becomes higher.

### <Seventh Embodiment>

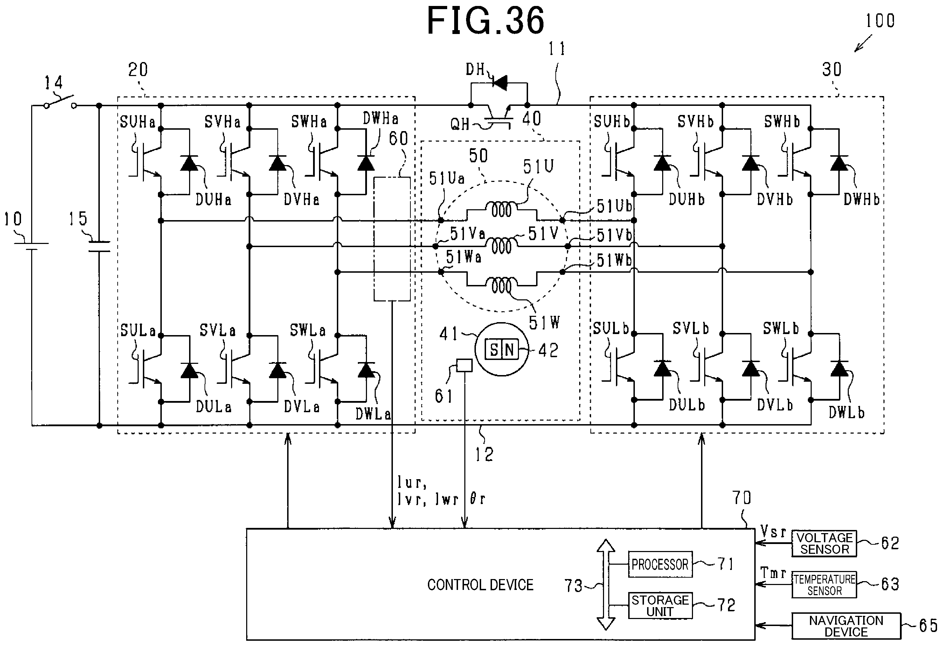

A seventh embodiment will be described below with reference to the accompanying drawings, mainly with respect to differences from the first to sixth embodiments. In the present embodiment, as illustrated in FIG. 36, the control system 100 includes a navigation device 65.

Map information including road information associated with altitudes is stored in a storage unit, for example, storage, of the navigation device 65. The navigation device 65 receives current location information of the host vehicle detected by a GPS sensor, not illustrated, included in the control system 100. The navigation device 65 is configured to communicate with the control device 70.

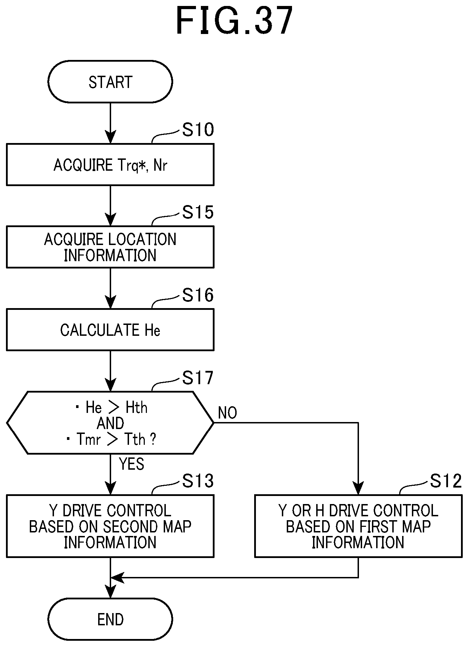

FIG. 37 is a flowchart illustrating a torque control routine for the rotating electric machine 40. The torque control routine illustrated in FIG. 37 is repeatedly performed by the processor 71, for example, at a predefined control cycle.

After completion of the process at step S10, at step S15, the determination unit 87 acquires the map information and the current location information of the host vehicle from the navigation device 65.

At step S16, the determination unit 87 calculates an altitude He of a road on which the host vehicle is currently located based on the information acquired at step S15.

At step S17, the determination unit 87 determines whether both the first and second conditions are met. The first condition of the present embodiment is that the calculated altitude He is higher than an altitude threshold Hth, which corresponds to a "determination threshold."

The processes at steps S15 to S17 may also be applied to the second to sixth embodiments.

### <Other Embodiments>

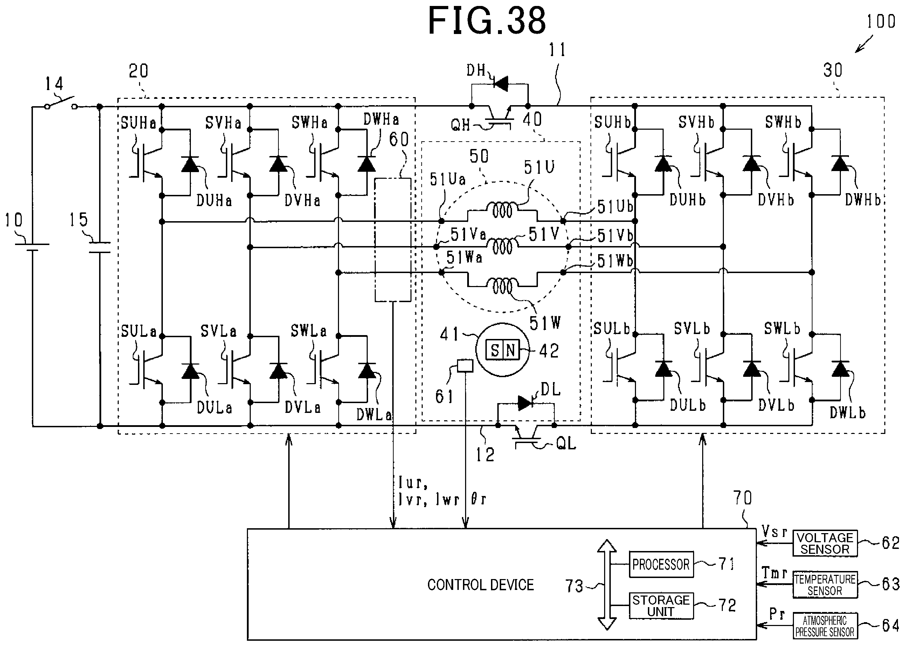

The above embodiments may be modified as follows.
▪ As illustrated in FIG. 38, the control system 100 may include a second changeover switch QL in addition to the first changeover switch QH. The second changeover switch QL is provided on the negative-electrode-side bus 12, which corresponds to a "target bus." The second changeover switch QL may be, for example, a semiconductor switching element or a mechanical relay. The second changeover switch QL of the present embodiment is an IGBT. A freewheel diode DL is connected in anti-parallel to the second changeover switch QL. A collector of the second changeover switch QL is connected on a side closer to the second inverter 30 side, and an emitter of the second changeover switch QL is connected on a side closer to the first inverter 20 side.

When turned on, the second changeover switch QL electrically connects the emitters of the lower-arm switches SULa, SVLa, and SWLa of the respective phases of the first inverter 20 to the emitters of the lower-arm switches SULb, SVLb, and SWLb of the respective phases of the second inverter 30. When turned off, the second changeover switch QL electrically disconnects the emitters of the lower-arm switches SULa, SVLa, and SWLa of the respective phases of the first inverter 20 from the emitters of the lower-arm switches SULb, SVLb, and SWLb of the respective phases of the second inverter 30.

When selecting the H drive control, the control device 70 turns on the first changeover switch QH and the second changeover switch QL. When selecting the Y drive control, the control device 70 turns off the first changeover switch QH and the second changeover switch QL.

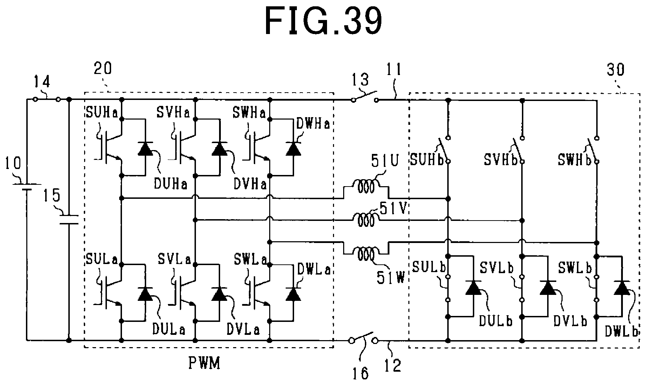

In the Y drive control, as illustrated in FIG. 39, the control device 70 may hold the upper-arm switches SUHb, SVHb, and SWHb of the respective phases of the second inverter 30 in an OFF state and may hold the lower-arm switches SULb, SVLb, and SWLb of the respective phases of the second inverter 30 in an ON state. In this case, the lower-arm side of the second inverter 30 functions as a neutral point.
▪ In each of the above embodiments, a condition for determining whether dielectric strength is relatively low may be either one of the first and second conditions, rather than both the first and second conditions.
▪ The carrier signal is not limited to a triangular wave signal, and may be, for example, a sawtooth wave signal.
▪ In each of the above embodiments, the control device 70 may perform PWM driving based on space vector modulation instead of PWM driving based on a magnitude comparison between the command value and the carrier signal.
▪ The DC power source is not limited to the battery, and may be, for example, a fuel cell.
▪ The rotating electric machine is not limited to a permanent-magnet-field synchronous machine, and may be, for example, an induction machine.
▪ The rotating electric machine is not limited to a three-phase rotating electric machine, and may be a two-phase rotating electric machine or a rotating electric machine having four or more phases.
▪ The semiconductor switches included in the first inverter and the second inverter are not limited to IGBTs, and may be, for example, N-channel MOSFETs. In this case, a high-side terminal of each switch is a drain, and a low-side terminal thereof is a source. Each switch includes a body diode.
▪ The inverter, the rotating electric machine, and the control device are not limited to being mounted to a vehicle, and may be mounted to a mobile object such as an aircraft or a ship. When the mobile object is an aircraft, the rotating electric machine serves as a flight power source of the aircraft. When the mobile object is a ship, the rotating electric machine serves as a propulsion power source of the ship.

When the mobile object is an aircraft, in the seventh embodiment, the determination unit 87 may acquire altitude information of the aircraft and use, as the first condition, a condition that the acquired altitude is higher than an altitude threshold, which corresponds to a "determination threshold."

The inverter, the rotating electric machine, and the control device are not limited to being mounted to a mobile object.
▪ The controller and the method thereof described in the present disclosure may be realized by a dedicated computer provided by configuring a processor and memory programmed to perform one or more functions embodied in a computer program. Alternatively, the controller and the method thereof described in the present disclosure may be realized by a dedicated computer provided by configuring a processor with one or more dedicated hardware logic circuits. Alternatively, the controller and the method thereof described in the present disclosure may be realized by one or more dedicated computers configured by a combination of a processor and memory programmed to perform one or more functions, and a processor configured with one or more hardware logic circuits. In addition, the computer program may be stored in a computer-readable, non-transitory tangible storage medium as instructions to be executed by a computer.

Although the present disclosure has been described in accordance with the embodiments, it is understood that the present disclosure is not limited to those embodiments or structures. The present disclosure encompasses various modifications and variations within the scope of equivalents. In addition, various combinations and forms, as well as other combinations and forms including only one element, more elements, or fewer elements than those combinations and forms, are also within the scope and spirit of the present disclosure.

## Claims

1. A control device (70) for a rotating electric machine, the control device being configured to be applied to a system comprising:
a rotating electric machine (40) including multi-phase armature windings (51U to 51W);
a first inverter (20) including, for each phase, a first upper-arm switch (SUHa to SWHa) and a first lower-arm switch (SULa to SWLa) connected in series with each other, a series connection of the first upper-arm switch and the first lower-arm switch being connected in parallel with a DC power source (10);
a second inverter (30) including, for each phase, a second upper-arm switch (SUHb to SWHb) and a second lower-arm switch (SULb to SWLb) connected in series with each other;
a positive-electrode-side bus (11) electrically connecting, for each phase, a high-potential-side terminal of the first upper-arm switch and a high-potential-side terminal of the second upper-arm switch;
a negative-electrode-side bus (12) electrically connecting, for each phase, a low-potential-side terminal of the first lower-arm switch and a low-potential-side terminal of the second lower-arm switch; and
a changeover switch (QH, QL) provided in a target bus, the target bus being at least one of the positive-electrode-side bus and the negative-electrode-side bus,
wherein, for each phase, a low-potential-side terminal of the first upper-arm switch and a high-potential-side terminal of the first lower-arm switch are electrically connected to a first end (51Ua to 51Wa) of the armature winding,
wherein, for each phase, a low-potential-side terminal of the second upper-arm switch and a high-potential-side terminal of the second lower-arm switch are electrically connected to a second end (51Ub to 51Wb) of the armature winding,
wherein the changeover switch electrically connects the first inverter and the second inverter on the target bus when turned on, and disconnects the first inverter and the second inverter from each other on the target bus when turned off,
the control device comprising:
a setting unit (85) configured to set, as a control mode of the first upper-arm switch, the first lower-arm switch, the second upper-arm switch, and the second lower-arm switch, either Y drive control or H drive control; and
a determination unit (87) configured to determine whether partial discharge is likely to occur between the armature windings of two different phases,
wherein the Y drive control is control in which, with the changeover switch turned off, the second upper-arm switches of respective phases are fixed in an ON state and the second lower-arm switches of the respective phases are fixed in an OFF state, or with the changeover switch turned off, the second lower-arm switches of the respective phases are fixed in an ON state and the second upper-arm switches of the respective phases are fixed in an OFF state, and the first upper-arm switch and the first lower-arm switch are turned on and off,
wherein the H drive control is control in which the first upper-arm switch, the first lower-arm switch, the second upper-arm switch, and the second lower-arm switch are turned on and off, and
wherein the setting unit is configured to, when the determination unit determines that the partial discharge is likely to occur, perform a process for restricting the H drive control.

2. The control device for a rotating electric machine according to claim 1, wherein the setting unit is configured to, for each phase:
in the H drive control, set a switching speed of the first upper-arm switch and the first lower-arm switch to be higher than a switching speed of the second upper-arm switch and the second lower-arm switch;
in the H drive control, when current flows through the armature winding in a direction from the second end toward the first end, switch the second upper-arm switch to ON and then switch the first lower-arm switch to ON, and thereafter switch the first lower-arm switch to OFF and then switch the second upper-arm switch to OFF;
in the H drive control, when current flows through the armature winding in a direction from the first end toward the second end, switch the second lower-arm switch to ON and then switch the first upper-arm switch to ON, and thereafter switch the first upper-arm switch to OFF and then switch the second lower-arm switch to OFF;
when the determination unit determines that the partial discharge is likely to occur and when current flows through the armature winding in the direction from the second end toward the first end, switch the first lower-arm switch to ON and then switch the second upper-arm switch to ON, and thereafter switch the second upper-arm switch to OFF and then switch the first lower-arm switch to OFF, as the process for restricting the H drive control; and
when the determination unit determines that the partial discharge is likely to occur and when current flows through the armature winding in the direction from the first end toward the second end, switch the first upper-arm switch to ON and then switch the second lower-arm switch to ON, and thereafter switch the second lower-arm switch to OFF and then switch the first upper-arm switch to OFF, as the process for restricting the H drive control.

3. The control device for a rotating electric machine according to claim 1, wherein the setting unit is configured to, for each phase:
in the H drive control, set a switching speed of the first upper-arm switch and the first lower-arm switch to be higher than a switching speed of the second upper-arm switch and the second lower-arm switch, and set a switching frequency of the first upper-arm switch and the first lower-arm switch to be higher than a switching frequency of the second upper-arm switch and the second lower-arm switch; and
when the determination unit determines that the partial discharge is likely to occur, perform, as the restricting process, a process of,
in the H drive control, setting the switching frequency of the first upper-arm switch and the first lower-arm switch to be lower than the switching frequency of the second upper-arm switch and the second lower-arm switch.

4. The control device for a rotating electric machine according to claim 1, wherein
the setting unit is configured to, when the determination unit determines that the partial discharge is likely to occur, inhibit the H drive control from being set and set the Y drive control as the process for restricting the H drive control.

5. The control device for a rotating electric machine according to claim 4, wherein
the setting unit is configured to:
when determining that an operating point defined by a rotational speed of a rotor (41) included in the rotating electric machine and a torque of the rotating electric machine is in a region of the Y drive control, set the Y drive control as the control mode;
when determining that the operating point is in a region of the H drive control, set the H drive control as the control mode; and
when the determination unit determines that the partial discharge is likely to occur, set the Y drive control as the control mode even when the operating point is in the region of the H drive control, and then turn on and off the first upper-arm switches and the first lower-arm switches so as to cause a field-weakening current to flow through the armature windings.

6. The control device for a rotating electric machine according to claim 1, wherein the setting unit is configured to:
when determining that an operating point defined by a rotational speed of a rotor (41) included in the rotating electric machine and a torque of the rotating electric machine is in a region of the Y drive control, set the Y drive control as the control mode;
when determining that the operating point is in a region of the H drive control, set the H drive control as the control mode; and
when the determination unit determines that the partial discharge is likely to occur, shift a high-torque-side boundary of the region of the H drive control to a lower-torque side, as the process for restricting the H drive control.

7. The control device for a rotating electric machine according to claim 1, wherein
the setting unit is configured to, when the determination unit determines that the partial discharge is likely to occur, reduce, as the process for restricting the H drive control, switching speeds of the first upper-arm switches, the first lower-arm switches, the second upper-arm switches, and the second lower-arm switches used in the H drive control to be lower than respective switching speeds of the first upper-arm switches, the first lower-arm switches, the second upper-arm switches, and the second lower-arm switches used in the Y drive control.

8. The control device for a rotating electric machine according to claim 1, wherein the setting unit is configured to:
in the H drive control, turn on and off the first upper-arm switches, the first lower-arm switches, the second upper-arm switches, and the second lower-arm switches while imposing a condition that, among switching timings of switching states of the first upper-arm switches, the first lower-arm switches, the second upper-arm switches, and the second lower-arm switches, an interval between temporally adjacent switching timings is equal to or greater than a threshold; and
when the determination unit determines that the partial discharge is likely to occur, make the threshold greater, as the process for restricting the H drive control, than when the determination unit does not determine that the partial discharge is likely to occur.

9. The control device for a rotating electric machine according to claim 8, wherein
the setting unit is configured to, when the determination unit determines that the partial discharge is likely to occur, increase the threshold as atmospheric pressure around the system becomes lower.

10. The control device for a rotating electric machine according to claim 8, wherein
the setting unit is configured to, when the determination unit determines that the partial discharge is likely to occur, increase the threshold as a temperature of the rotating electric machine increases.

11. The control device for a rotating electric machine according to any one of claims 1 to 8, wherein
the determination unit is configured to determine that the partial discharge is likely to occur when determining that at least one of a condition that a temperature of the rotating electric machine exceeds a temperature threshold and a condition that atmospheric pressure around the system falls below an atmospheric pressure threshold is met.

12. The control device for a rotating electric machine according to any one of claims 1 to 8, wherein
the system is mounted to a mobile object, and
the determination unit determines that the partial discharge is likely to occur on condition that the determination unit determines that an altitude or elevation of the mobile object exceeds a determination threshold.

13. A program applied to a system, the system comprising:
a rotating electric machine (40) including multi-phase armature windings (51U to 51W);
a first inverter (20) including, for each phase, a first upper-arm switch (SUHa to SWHa) and a first lower-arm switch (SULa to SWLa) connected in series with each other, a series connection of the first upper-arm switch and the first lower-arm switch being connected in parallel with a DC power source (10);
a second inverter (30) including, for each phase, a second upper-arm switch (SUHb to SWHb) and a second lower-arm switch (SULb to SWLb) connected in series with each other;
a positive-electrode-side bus (11) electrically connecting, for each phase, a high-potential-side terminal of the first upper-arm switch and a high-potential-side terminal of the second upper-arm switch;
a negative-electrode-side bus (12) electrically connecting, for each phase, a low-potential-side terminal of the first lower-arm switch and a low-potential-side terminal of the second lower-arm switch; and
a changeover switch (QH, QL) provided in a target bus, the target bus being at least one of the positive-electrode-side bus and the negative-electrode-side bus,
wherein, for each phase, a low-potential-side terminal of the first upper-arm switch and a high-potential-side terminal of the first lower-arm switch are electrically connected to a first end of the armature winding,
wherein, for each phase, a low-potential-side terminal of the second upper-arm switch and a high-potential-side terminal of the second lower-arm switch are electrically connected to a second end of the armature winding,
wherein the changeover switch electrically connects the first inverter and the second inverter on the target bus when turned on, and disconnects the first inverter and the second inverter from each other on the target bus when turned off,
the program causing a processor (71) to execute:
a setting process of setting, as a control mode of the first upper-arm switch, the first lower-arm switch, the second upper-arm switch, and the second lower-arm switch, either Y drive control or H drive control; and
a determination process of determining whether partial discharge is likely to occur between the armature windings of two different phases,
wherein the Y drive control is control in which, with the changeover switch turned off, the second upper-arm switches of respective phases are fixed in an ON state and the second lower-arm switches of the respective phases are fixed in an OFF state, or with the changeover switch turned off, the second lower-arm switches of the respective phases are fixed in an ON state and the second upper-arm switches of the respective phases are fixed in an OFF state, and the first upper-arm switch and the first lower-arm switch are turned on and off,
wherein the H drive control is control in which the first upper-arm switch, the first lower-arm switch, the second upper-arm switch, and the second lower-arm switch are turned on and off, and
wherein the setting process includes restricting the H drive control when it is determined in the determination process that the partial discharge is likely to occur.

14. A control method for a rotating electric machine, the control method being applied to a system comprising:
a rotating electric machine (40) including multi-phase armature windings (51U to 51W);
a first inverter (20) including, for each phase, a first upper-arm switch (SUHa to SWHa) and a first lower-arm switch (SULa to SWLa) connected in series with each other, a series connection of the first upper-arm switch and the first lower-arm switch being connected in parallel with a DC power source (10);
a second inverter (30) including, for each phase, a second upper-arm switch (SUHb to SWHb) and a second lower-arm switch (SULb to SWLb) connected in series with each other;
a positive-electrode-side bus (11) electrically connecting, for each phase, a high-potential-side terminal of the first upper-arm switch and a high-potential-side terminal of the second upper-arm switch;
a negative-electrode-side bus (12) electrically connecting, for each phase, a low-potential-side terminal of the first lower-arm switch and a low-potential-side terminal of the second lower-arm switch; and
a changeover switch (QH, QL) provided in a target bus, the target bus being at least one of the positive-electrode-side bus and the negative-electrode-side bus,
wherein, for each phase, a low-potential-side terminal of the first upper-arm switch and a high-potential-side terminal of the first lower-arm switch are electrically connected to a first end of the armature winding,
wherein, for each phase, a low-potential-side terminal of the second upper-arm switch and a high-potential-side terminal of the second lower-arm switch are electrically connected to a second end of the armature winding,
wherein the changeover switch electrically connects the first inverter and the second inverter on the target bus when turned on, and disconnects the first inverter and the second inverter from each other on the target bus when turned off,
the control method comprising:
a setting step of setting, as a control mode of the first upper-arm switch, the first lower-arm switch, the second upper-arm switch, and the second lower-arm switch, either Y drive control or H drive control; and
a determination step of determining whether partial discharge is likely to occur between the armature windings of two different phases,
wherein the Y drive control is control in which, with the changeover switch turned off, the second upper-arm switches of respective phases are fixed in an ON state and the second lower-arm switches of the respective phases are fixed in an OFF state, or with the changeover switch turned off, the second lower-arm switches of the respective phases are fixed in an ON state and the second upper-arm switches of the respective phases are fixed in an OFF state, and the first upper-arm switch and the first lower-arm switch are turned on and off,
wherein the H drive control is control in which the first upper-arm switch, the first lower-arm switch, the second upper-arm switch, and the second lower-arm switch are turned on and off, and
wherein the setting step includes restricting the H drive control when it is determined in the determination step that the partial discharge is likely to occur.
